# EUROPEAN PATENT APPLICATION

(11) **EP 3 922 160 A1**
(43) Date of publication of application: **15.12.2021**
(21) Application number: 20752078.4
(22) Date of filing: 23.01.2020
(51) Int. Cl.: A47L 25/00, B08B 1/00, G02B 6/36

(54) **CLEANING DEVICE**

(30) Priority: 08.02.2019 JP 2019022090
(71) Applicant: Tomoegawa Co., Ltd., Tokyo 104-8335 (JP)
(72) Inventor: GOTO, Makoto, Shizuoka-shi, Shizuoka 424-0831 (JP); SUZUKI, Masayoshi, Shizuoka-shi, Shizuoka 424-0831 (JP)
(74) Representative: Hoffmann Eitle
(86) International application number: PCT/JP2020/002414
(87) International publication number: WO 2020/162214

(57) **Abstract**

Provided is a cleaning device that can follow a complicated shape and can accurately remove stains by using a resin having high toughness.

A cleaning device including a contaminant collector, in which the cleaning device is characterized in that the contaminant collector includes a polyurethane resin, the contaminant collector has an Asker C hardness of 45 to 90, and the contaminant collector has a tensile strength of 2.0 MPa or more and 30 MPa or less.

## Description

### Technical Field

The present invention relates to a cleaning device including an adhesive contaminant collector.

### Background Art

The cleaning device including a cleaning body having adhesiveness can clean an object to be cleaned by pressing the cleaning body against the object to be cleaned and collecting and holding contaminants due to the adhesiveness.

It is known that the above cleaning device is also used as an optical connector cleaning device for cleaning an optical connector (See, for example, Patent Literature 1). When the optical fiber is connected to the optical connector, the end face of the optical fiber faces the end face of the ferrule of the optical connector. Therefore, when dust attaches to the end face of the ferrule of the optical connector or the end face of the optical fiber, the transmission loss increases. For this reason, it is necessary to clean the end face of the ferrule of the optical connector using the optical connector cleaning device.

### Citation List

### Patent Literature

Patent Literature 1: JP 2002-219421 A

### Summary of Invention

### Technical Problem

When cleaning is performed using the cleaning device described above, in a case where the object to be cleaned includes a complicated shape such as unevenness on the surface thereof, the cleaning body cannot follow the shape such as the unevenness, the cleaning body cannot reach dirt, and the cleaning may be insufficient. In addition, when the cleaning body comes into contact with the unevenness or the like, part of the cleaning body may attach to the object to be cleaned, which may contaminate the cleaning body.

In addition, there is an optical connector in which a guide pin protrudes, and even when only the connection end face can be cleaned, when dirt remains on the guide pin, the dirt on the guide pin may contaminate the connection end face. In addition, although a cleaning device capable of cleaning both the guide pin and the connection end face is required, it is difficult to sufficiently clean dirt while following the shape of the guide pin, and there is a problem that cleaning of dirt is insufficient or part of the cleaning body attaches to the guide pin and the connection end face.

The present invention has been made in view of the above points, and an object of the present invention is to provide a cleaning device that can follow a complicated shape and can accurately remove dirt by using a resin having high toughness.

### Solution to Problem

In a feature of the cleaning device according to the present invention is the present invention (1) relates to a cleaning device including a contaminant collector, wherein
the contaminant collector includes a polyurethane resin, wherein
the contaminant collector has an Asker C hardness of 45 to 90, and wherein
the contaminant collector has a tensile strength of 2.0 MPa or more and 30 MPa or less.

The present invention (2) relates to the cleaning device of the invention (1) wherein
the contaminant collector has a hysteresis loss of 3% or more and 50% or less.

The present invention (3) relates to the cleaning device of the invention (1) or (2), wherein
the contaminant collector is a strip-shaped film.

The present invention (4) relates to the cleaning device of the invention (3) wherein
the contaminant collector is laminated on a substrate directly or via another layer.

The present invention (5) relates to the cleaning device according to the invention (4) wherein
the substrate includes a release layer on a surface of the substrate, where the surface faces a surface on which the contaminant collector is laminated.

The present invention (6) relates to the cleaning device of any one of the inventions (3) to (5), wherein
the contaminant collector is spirally wound.

The present invention (7) relates to the cleaning device of any one of the inventions (3) to (6), further including
a main body housing a supply holder that has the contaminant collector and to which the contaminant collector for cleaning an end face of a connector is suppliably held,
a cleaning head at which the contaminant collector supplied from the main body is positioned, the cleaning head being held at a constant holding position with respect to the main body,
a control body that is engageable with the connector and is displaceable from a first position to a second position different from the first position with respect to the cleaning head while maintaining a state of being engaged with the connector, and
a supply mechanism that transmits a motion in which the control body is displaced from the first position to the second position to the contaminant collector to displace the contaminant collector and supply the contaminant collector to the cleaning head, wherein
when the control body is located at the first position, the cleaning head is away from an end face of the connector, wherein
the contaminant collector is displaced by the supply mechanism while the control body is displaced from the first position to the second position, and wherein
when the control body is located at the second position, the cleaning head comes into contact with the end face of the optical connector.

The present invention (8) relates to the cleaning device of the invention (7), wherein
the cleaning device is for cleaning an end face, of a connector, from which a pin protrudes.

The present invention (9) relates to the cleaning device of the invention (1), wherein
the cleaning device is for cleaning an end face of a connector from which a pin protrudes, wherein the cleaning device includes
the contaminant collector and
a support body that supports the contaminant collector such that at least part of a surface of the contaminant collector is exposed, wherein
a thickness of the contaminant collector in a direction normal to an exposed surface portion of the contaminant collector is larger than a length from a surface of the connection end face to a pin tip portion.

The present invention (10) relates to the cleaning device of the invention (9), wherein
the support body includes a plate body and a side wall portion formed on a peripheral edge of the plate body so as to surround a side of the contaminant collector.

The present invention (11) relates to the cleaning device of any one of the inventions (1) to (10), wherein
the cleaning device is for cleaning an end face of an optical connector.

The invention (12) relates to the cleaning device of the invention (11), wherein the end face of the optical connector is an end face for connecting an optical fiber.

### Advantageous Effects of Invention

It is possible to follow a complicated shape of the surface to be cleaned and to accurately remove dirt.

### Brief Description of Drawings

Fig. 1 is a perspective view schematically illustrating an entire cleaning device 10 according to the present embodiment.
Fig. 2 is a perspective view illustrating an overall outline of the cleaning device 10 and an optical connector OC according to the present embodiment.
Fig. 3 is a side view illustrating a left side face of the cleaning device 10 according to the present embodiment.
Fig. 4 is a side view illustrating a right side face of the cleaning device 10 according to the present embodiment.
Fig. 5 is a perspective view illustrating a state in which a right housing 110R of the cleaning device 10 according to the present embodiment is removed.
Fig. 6 is a perspective view illustrating a state in which a left housing 110L of the cleaning device 10 according to the present embodiment is removed.
Fig. 7 is a perspective view illustrating a state in which a supply reel 200 and a winding reel 300 of the cleaning device 10 according to the present embodiment are removed.
Fig. 8 is a perspective view illustrating a configuration of the right housing 110R of the cleaning device 10 according to the present embodiment.
Fig. 9 is a perspective view illustrating a configuration of the left housing 110L of the cleaning device 10 according to the present embodiment.
Fig. 10 is a perspective view illustrating a configuration of a head 400 (head 400 and head holder 420) of cleaning device 10 according to the present embodiment.
Fig. 11 is a perspective view illustrating a path of a cleaning body CT in the head 400 of the cleaning device 10 according to the present embodiment.
Fig. 12 is a cross-sectional view illustrating a path of the cleaning body CT in the head 400 of the cleaning device 10 according to the present embodiment.
Fig. 13 is a cross-sectional view illustrating a change in movement of a winding control body 500 of the cleaning device 10 according to the present embodiment.
Fig. 14 is a cross-sectional view illustrating a change in movement of the winding control body 500 of the cleaning device 10 according to the present embodiment.
Fig. 15 is a schematic diagram illustrating a ratchet gear 322, a rack 536, and a winding reel pawl 190 of the cleaning device 10 according to the present embodiment.
Figs. 16A to 16D are cross-sectional views illustrating a process of cleaning an end face ES of a ferrule FE of the optical connector using the cleaning device 10 according to the present embodiment.
Figs. 17A to 17D are cross-sectional views illustrating a process of cleaning the end face ES of the ferrule FE of the optical connector using the cleaning device 10 according to the present embodiment.
Fig. 18A is a perspective view illustrating a cleaning device of a thirteenth execution mode, Fig. 18B is a longitudinal sectional view illustrating the cleaning device of the thirteenth execution mode, and Fig. 18C is a perspective view illustrating an optical connector.

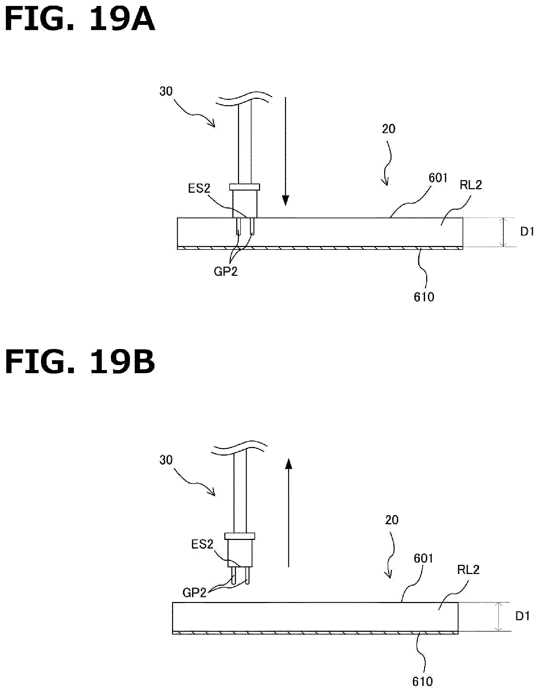

Figs. 19A and 19B are cross-sectional views for explaining a method of cleaning an end face, of an optical connector, from which a guide pins GP protrudes using the cleaning device of the thirteenth execution mode, Fig. 19A is a cross-sectional view illustrating a state in which the contaminant collector of the cleaning device is punctured with the guide pins GP protruding from the end face of the optical connector and the end face is pressed against a surface of the contaminant collector, and Fig. 19B is a cross-sectional view illustrating a state in which the guide pins GP are pulled out of the contaminant collector.
Fig. 20 is a longitudinal sectional view illustrating a cleaning device of a fourteenth execution mode.
Fig. 21 is a cross-sectional view illustrating a state in which the contaminant collector of the cleaning device is punctured with the guide pins GP protruding from the end face of the optical connector and the end face is pressed against the surface of the contaminant collector when the end face, of the optical connector, from which the guide pins GP protrude is cleaned using the cleaning device of the fourteenth execution mode.
Fig. 22 is a longitudinal sectional view illustrating a cleaning device of a fifteenth execution mode.
Fig. 23 is a longitudinal sectional view illustrating a cleaning device of a sixteenth execution mode.
Figs. 24A and 24B are a top perspective view and an explanatory view illustrating a cleaning device of a seventeenth execution mode.

### Description of Embodiments

### ««Outline of Present Embodiment»»

A cleaning device of the present invention includes a contaminant collector that contacts an object to be cleaned, and is capable of collecting and holding contaminants.

Hereinafter, the contaminant collector according to the present invention will be described in detail.

### <<<Contaminant collector>>>

The contaminant collector of the present invention includes, but is not limited to, a polyurethane resin, has an Asker C hardness of 45 to 90, and a tensile strength of 2.0 MPa or more and 30 MPa or less.

When the contaminant collector has the above characteristics, the contaminant collector can follow the shape of the surface to be cleaned. Specifically, when the contaminant collector is used for a connection end face, of an optical fiber optical connector, from which a guide pin protrudes, the contaminant collector can follow the shape of the guide pin, and the cleaning effect on the guide pin and the optical connector connection end face is remarkably high. In addition, the contaminants collected in the contaminant collector at one time do not attach again to the surface to be cleaned, and thus can be used as a cleaner having an extremely high cleaning effect.

The shape of the contaminant collector is not particularly limited, and may be, for example, a band-like or sheet-like film, a rod-like, columnar, spindle-shaped, frustum, or block-like polygonal body, or a circular body, an elliptical body, a spherical shape, or an elliptical spherical shape.

The contaminant collector may be laminated on the substrate, the support body, or the contaminant collector holder directly or via another layer, or may be housed in an accommodating body or the like in a state where a part thereof is exposed.

The substrate may include a release layer on a surface of the substrate, where the surface faces a surface on which the collector is laminated.

The contaminant collector may be spirally wound.

### «Polyurethane resin»

The contaminant collector of the present invention includes a polyurethane resin. The composition of the polyurethane resin is not limited as long as the polyurethane resin has dynamic characteristics of the contaminant collector.

The polyurethane resin is formed of a composition having a polyol component and a polyisocyanate component, and may contain other components in the composition.

### <Polyol component>

The polyurethane resin includes a polyol component. The polyol component can include a plurality of types of polyols.

The number of hydroxyl groups (hereinafter, may be referred to as the number of functional groups.) contained in the structure of one molecule of the polyol component is 2 to 5, preferably 2 to 3. When the number of hydroxyl groups of the polyol is in such a range, it is possible to obtain a polyurethane resin product which has good elongation, is hardly broken, and has high shape followability. When a plurality of kinds of polyols are contained as the polyol component, the number of hydroxyl groups of the polyol component can be obtained by adding values obtained by multiplying the ratio of the blending amount of respective polyols and the number of hydroxyl groups of respective polyols.

The number average molecular weight of the polyol component can be 100 to 6000. When the number average molecular weight of the polyol component is within such a range, it is possible to obtain a polyurethane resin product which has good elongation, is hardly broken, and has high shape followability.

The polyol is not particularly limited as long as the above-mentioned characteristics are satisfied. Examples of the polyol include polyester polyols, polycarbonate polyols, polyether polyols, polyester ether polyols, polydiene-based polyols, hydrogenated polydiene polyols, and polymer polyols thereof. The polyols may be used singly or in combination of two or more kinds thereof.

Examples of the polyester polyol include polyester polyols obtained by dehydration condensation reaction of a polyol and a polycarboxylic acid, and polyester polyols obtained by ring-opening polymerization of lactone monomers such as ε-caprolactone and methylvalerolactone.

The polyol forming the polyester polyol is not particularly limited as long as the effect of the present invention is not impaired. Examples of the polyol include aliphatic polyols such as ethylene glycol, 1,3-propylene glycol, 1,2-propylene glycol, 1,3-butanediol, 1,4-butanediol, 1,5-pentanediol, 1,6-hexanediol, 3-methyl-1,5-pentanediol, neopentyl glycol, 1,8-octanediol, 1,9-nonanediol, 1,4-tetracosanediol, 1,6-tetracosanediol, 1,4-hexacosanediol, 1,6-octacosanediol glycerin, trimethylolpropane, trimethylolethane, hexanetriol, pentaerythritol, sorbitol, mannitol, sorbitan, diglycerin and dipentaerythritol; alicyclic polyols such as 1,2-cyclohexanediol, 1,4-cyclohexanediol, cyclohexanedimethanol, tricyclodecanedimethanol, cyclopentadienedimethanol, 2,5-norbornanediol, 1,3-adamantanediol and dimer diol; and aromatic polyols such as bisphenol A, bisphenol F, phenol novolac, and cresol novolac. These can be used singly or in combination of one or more thereof.

The polycarboxylic acid is not particularly limited as long as it has a plurality of carboxyl groups in its molecular structure and does not inhibit the effect of the present invention. Examples of the polycarboxylic acid include aliphatic polycarboxylic acids such as succinic acid, adipic acid, sebacic acid, and azelaic acid; aromatic polycarboxylic acids such as phthalic acid, terephthalic acid, isophthalic acid and naphthalenedicarboxylic acid; alicyclic polycarboxylic acids such as hexahydrophthalic acid, hexahydroterephthalic acid and hexahydroisophthalic acid; or an acid ester thereof. One or a plurality of these can be used in combination.

Examples of the polycarbonate polyol include those obtained by reacting at least one of polyhydric alcohols such as ethylene glycol, 1,2-propylene glycol, 1,3-propylene glycol, 1,3-butanediol, 1,4-butanediol, 1,5-pentanediol, 1,6-hexanediol, 3-methyl-1,5-pentanediol, neopentyl glycol, 1,8-octanediol, 1,9-nonanediol, and diethylene glycol with diethylene carbonate, dimethyl carbonate, diethyl carbonate, and the like.

Examples of the polyether polyol include polyethylene glycol, polypropylene glycol, polytetramethylene ether glycol, and the like obtained by polymerizing cyclic ethers such as ethylene oxide, propylene oxide, tetrahydrofuran, and the like, and copolyethers thereof. In addition, it can also be obtained by polymerizing the cyclic ether using a polyhydric alcohol such as glycerin or trimethylolethane.

Examples of the polyester ether polyol include those obtained by a dehydration condensation reaction of a polycarboxylic acid and a glycol such as diethylene glycol or a propylene oxide adduct.

Examples of the polycarboxylic acid include aliphatic polycarboxylic acids such as succinic acid, adipic acid, sebacic acid, and azelaic acid; aromatic polycarboxylic acids such as phthalic acid, terephthalic acid, isophthalic acid and naphthalenedicarboxylic acid; alicyclic polycarboxylic acids such as hexahydrophthalic acid, hexahydroterephthalic acid and hexahydroisophthalic acid; or an acid ester thereof. One or a plurality of these can be used in combination.

Polymeric polyols are obtained by in-situ polymerization of ethylenically unsaturated monomers in polyols. Examples of the ethylenically unsaturated monomer include acrylic-based monomers such as (meth) acrylonitrile, and alkyl (C1 to 20 or more) (meth) acrylate (methyl methacrylate, and the like); hydrocarbon-based monomers such as aromatic unsaturated hydrocarbons (such as styrene), and aliphatic unsaturated hydrocarbons (C2 to 20 or more alkenes, alkadienes, and the like, for example, α-olefin, butadiene, and the like); and a combination of two or more thereof [for example, a combination of acrylonitrile/styrene (weight ratio: 100/0 to 80/20)].

Among these polyols, it is preferable to contain a polyether polyol, a polyester polyol, and a polymer polyol, and it is more preferable to use a mixture of at least two of these polyols. When these polyols are used, it is possible to obtain a polyurethane resin product which has good elongation, is hardly broken, and has high shape followability.

### <Polyisocyanate component>

The polyisocyanate used in the present invention is not particularly limited as long as the effect of the present invention is not inhibited. Examples of the bifunctional polyisocyanates include aromatic polyisocyanates such as 2,4-toluene diisocyanate (2,4-TDI), 2,6-toluene diisocyanate (2,6-TDI), m-phenylene diisocyanate, p-phenylene diisocyanate, 4,4'-diphenylmethane diisocyanate (4,4'-MDI), 2,4'-diphenylmethane diisocyanate (2,4'-MDI), 2,2'-diphenylmethane diisocyanate (2,2'-MDI), hydrogenated MDI, monomeric diphenylmethane diisocyanate (monomeric MDI), xylylene diisocyanate, 3,3'-dimethyl-4,4'-biphenylene diisocyanate, 3,3'-dimethoxy-4,4'-biphenylene diisocyanate, polymethylene polyphenyl polyisocyanate, 1,5-naphthalene diisocyanate, xylylene diisocyanate (XDI), hydrogenated XDI, tetramethylxylene diisocyanate (TMXDI); cycloaliphatic polyisocyanates such as cyclohexane-1,4-diisocyanate, isophorone diisocyanate, dicyclohexylmethane-4,4'-diisocyanate, and methylcyclohexane diisocyanate; and alkylene type polyisocyanates such as butane-1,4-diisocyanate, hexamethylene diisocyanate, isopropylene diisocyanate, methylene diisocyanate, and lysine diisocyanate. Examples of the tri- or more functional polyisocyanates include 1-methylbenzol-2,4,6-triisocyanate, 1,3,5-trimethylbenzol-2,4,6-triisocyanate, biphenyl-2,4,4'-triisocyanate, diphenylmethane-2,4,4'-triisocyanate, methyldiphenylmethane-4,6,4'-triisocyanate, 4,4'-dimethyldiphenylmethane-2,2',5,5'tetraisocyanate, triphenylmethane-4,4',4"-triisocyanate, polymeric MDI, lysine ester triisocyanate, 1,3,6-hexamethylene triisocyanate, 1,6,11 undecane triisocyanate, bicycloheptane triisocyanate, 1,8-diisocyanatomethyloctane, and the like; modified products thereof; and derivatives thereof. One or more of these isocyanates can be used in combination.

Among these isocyanates, aromatic and aliphatic isocyanates are preferably contained, aromatic isocyanates are more preferably contained, and 4,4'-diphenylmethane diisocyanate (4,4'-MDI), 2,4'-diphenylmethane diisocyanate (2,4'-MDI), 2,2'-diphenylmethane diisocyanate (2,2'-MDI), hydrogenated MDI, monomeric diphenylmethane diisocyanate (monomeric MDI), and hexamethylene diisocyanate are more preferably contained.

The NCO% of the polyisocyanate according to the present invention is 10 to 70, preferably 20 to 60, and more preferably 30 to 55. When the NCO% of the polyisocyanate is in such a range, it is possible to obtain a polyurethane resin product which has good elongation, is hardly broken, and has high shape followability.

Here, the definition of NCO% in the present invention is described in JIS K 1603-1 "Plastic-polyurethane raw material aromatic isocyanate test method-Part 1: Method of determining isocyanate group content", 3. Definition, 3.3 Isocyanate group content, "Amount of specific isocyanate present in sample expressed in mass fraction". The NCO% is measured according to JIS K 1603-1, Method B. Method B can be applied to purified or crude isocyanates of TDI, MDI, and polymethylene polyphenyl isocyanate, and modified isocyanates derived therefrom. The viscosity in the present invention conforms to JIS K 7301 "Test method of tolylene diisocyanate type prepolymer for thermosetting urethane elastomer, 6. Test method of general properties, 6.2 Viscosity".

### <Other additives>

The polyurethane resin according to the present invention may contain various additives as necessary in addition to the above-described components as long as the object of the present invention is not impaired. Examples of the additive include a surfactant, a filler, a plasticizer, a pigment, a dye, an anti-aging agent, an antioxidant, an antistatic agent, a flame retardant, an adhesiveness imparting agent, an antibacterial agent, a light stabilizer, a stabilizer, a dispersant, a catalyst, a crosslinking agent, and a solvent.

### «Method of producing contaminant collector»

As a method of producing the contaminant collector, a known method can be used. For example, a production example using a polyurethane resin is shown below.

An example of the method of producing a polyurethane resin product include a method in which a polyol component whose amount is less than a theoretical amount is added dropwise into a reaction vessel containing a predetermined amount of a polyisocyanate component and then heated to react an isocyanate group of the polyisocyanate component with a hydroxyl group of the polyol to prepare a polyurethane prepolymer having an active isocyanate at a terminal, thereby producing a polyurethane resin composition. The reaction is usually carried out at a temperature of 50 to 120°C, preferably 60 to 100°C. The reaction time is usually 1 to 15 hours.

In the blending of the polyol and the polyisocyanate used in production of the polyurethane prepolymer, the equivalent ratio (hereinafter, it is referred to as an equivalent ratio of [isocyanate groups/hydroxyl groups]) between the isocyanate group of the polyisocyanate and the hydroxyl group of the polyol is preferably in the range of 0.7 to 1.5, and more preferably in the range of 0.8 to 1.2. As long as the equivalent ratio is in such a range, it is possible to obtain a polyurethane resin product which has good elongation, is hardly broken, and has high shape followability.

The polyurethane prepolymer can be usually produced in the absence of a solvent, but may be produced by reacting a polyol and a polyisocyanate in an organic solvent. When the reaction is performed in an organic solvent, an organic solvent, such as ethyl acetate, n-butyl acetate, methyl ethyl ketone, or toluene, that does not inhibit the reaction can be used, but it is necessary to remove the organic solvent by a method such as heating under reduced pressure during the reaction or after the reaction is completed.

When the isocyanate group-terminated polyurethane prepolymer is produced, a urethanization catalyst can be used as necessary. The urethanization catalyst can be appropriately added at any stage of the reaction. Examples of the urethanization catalyst include tertiary amines and metal compounds.

Examples of the tertiary amine include TEDA (Triethylenediamine, 1,4-diazabicyclo-[2.2.2] octane), N,N,N',N'-tetramethylhexamethylenediamine, N,N,N',N'-tetramethylpropylenediamine, N,N,N',N',N"-pentamethyldiethylenetriamine, trimethylaminoethylpiperazine, N,N-dimethylcyclohexylamine, N,N-dimethylbenzylamine, N-methylmorpholine, N-ethylmorpholine, triethylamine, tributylamine, bis (dimethylaminoalkyl) piperazine, N,N,N',N'-tetramethylethylenediamine, N,N-diethylbenzylamine, bis (N,N-diethylaminoethyl) adipate, N,N,N',N'-tetramethyl-1,3-butanediamine, N,N-dimethyl-β-phenylethylamine, 1,2-dimethylimidazole, and 2-methylimidazole.

Examples of the metal compound include carboxylates of tin such as dimethyltin dilaurate, dibutyltin dilaurate, dibutyltin maleate, dibutyltin diacetate, tin octylate, and tin naphthenate; titanate esters such as tetrabutyl titanate and tetrapropyl titanate; organic aluminum compounds such as aluminum trisacetylacetonate, aluminum trisethylacetoacetate, and diisopropoxyaluminum ethylacetoacetate; chelate compounds such as zirconium tetraacetylacetonate and titanium tetraacetylacetonate; and octanoic acid metal salts such as lead octanoate and bismuth octanoate.

The number average molecular weight of the isocyanate group-terminated polyurethane prepolymer obtained by the above method is preferably in the range of 100 to 10,000, and more preferably in the range of 200 to 6,000. The number average molecular weight can be a numerical value measured by gel permeation chromatography and converted as a molecular weight of polystyrene as a standard sample.

The viscosity of the obtained polyurethane resin composition at 25°C is preferably 50,000 mPa·s or less, more preferably 30,000 mPa·s or less, and still more preferably 15,000 mPa·s or less. The lower limit value is not particularly limited, but is, for example, 10 mPa·s. When the viscosity is more than 50,000 mPa·s, it is difficult to reduce the thickness during molding of the urethane resin product. Here, the viscosity can be measured according to JIS K 7117-1.

The obtained polyurethane resin composition can be molded into a sheet or the like and then cured by light, heat, or the like to be used as a contaminant collector.

As a method of molding a polyurethane resin composition, the obtained polyurethane resin composition is defoamed under vacuum, then made to flow on a mold or a film subjected to a mold release treatment, and spread so as to have a predetermined film thickness using a film applicator or the like. Thereafter, the composition is allowed to stand or heated in an oven at normal temperature to 150°C for about 40 minutes to 2 days to cause a urethanization reaction. Thereafter, the molded contaminant collector can be obtained after detached from the mold or the film.

### «Physical properties of contaminant collector»

### <Asker C hardness>

The Asker C hardness of the contaminant collector of the present invention is 45 to 90, preferably 60 to 85. When the Asker C hardness of the contaminant collector is in such a range, the shape of the surface to be cleaned can be followed, and the repairing performance of contaminants is improved. Specifically, when the contaminant collector is used for the connection end face, of the optical fiber optical connector, from which the guide pin protrudes, it is possible to follow the shape of the guide pin, and the cleaning effect of the guide pin and the optical connector connection end face can be remarkable.

The Asker C hardness of the contaminant collector of the present invention is measured by the method described in JIS K 7312: 1996 "Physical test method for thermosetting polyurethane elastomer molded product". The measurement is performed using an Asker rubber hardness tester type C. The contaminant collector used for the measurement has been stored for 24 hours under an environment of 25°C and 50% RH after completion of curing of the polyurethane resin before the test.

### <Tensile properties such as tensile strength>

The tensile strength of the contaminant collector of the present invention is 2.0 MPa or more and 30 MPa or less, and preferably 4.0 MPa or more and 22 MPa or less. When the tensile strength of the contaminant collector is in such a range, the shape of the surface to be cleaned can be followed, and the repairing performance of contaminants is improved. Specifically, when the contaminant collector is used for the connection end face, of the optical fiber optical connector, from which the guide pin protrudes, it is possible to follow the shape of the guide pin, and the cleaning effect of the guide pin and the optical connector connection end face can be remarkable.

The breaking elongation of the contaminant collector of the present invention may be 100 mm to 150 mm, and is preferably 105 mm to 140 mm. When the breaking elongation of the contaminant collector is in such a range, the shape of the surface to be cleaned can be followed, and the repairing performance of contaminants is improved. Specifically, when the contaminant collector is used for the connection end face, of the optical fiber optical connector, from which the guide pin protrudes, it is possible to follow the shape of the guide pin, and the cleaning effect of the guide pin and the optical connector connection end face can be remarkable.

Further, the breaking elongation ratio of the contaminant collector of the present invention can be 200% to 700%, and is preferably 400% to 650%. When the breaking elongation ratio of the contaminant collector is in such a range, the shape of the surface to be cleaned can be followed, and the repairing performance of contaminants is improved. Specifically, when the contaminant collector is used for the connection end face, of the optical fiber optical connector, from which the guide pin protrudes, it is possible to follow the shape of the guide pin, and the cleaning effect of the guide pin and the optical connector connection end face can be remarkable.

The tensile strength of the contaminant collector of the present invention is measured by a measurement method using a dumbbell test piece described in JIS K 7312: 1996 "Vulcanized rubber and thermoplastic rubber-determination of tensile properties". The dumbbell test piece shape is a dumbbell-shaped No. 3 test piece, and is measured using a material testing machine. The measurement is performed at a crosshead speed of the material testing machine of 100 mm/min. At the same time, the breaking elongation and the breaking elongation ratio can be measured.

### <Tear strength>

The tear strength of the contaminant collector of the present invention can be 3 N to 30 N, and is preferably 5 N to 16 N. When the tear strength of the contaminant collector is in such a range, the shape of the surface to be cleaned can be followed, and the repairing performance of contaminants is improved. Specifically, when the contaminant collector is used for the connection end face, of the optical fiber optical connector, from which the guide pin protrudes, it is possible to follow the shape of the guide pin, and the cleaning effect of the guide pin and the optical connector connection end face can be remarkable.

The tear strength of the contaminant collector of the present invention is measured by a measurement method using an angle shape test piece described in JIS K 7312: 1996 "Vulcanized rubber and thermoplastic rubber-determination of tear strength". The measurement is performed using a material testing machine. The measurement is performed at a crosshead speed of the material testing machine of 100 mm/min.

### <Hysteresis loss>

The hysteresis loss of the contaminant collector of the present invention is 3% or more and 60% or less, and preferably 5 to 50%. When the hysteresis loss of the contaminant collector is in such a range, the shape of the surface to be cleaned can be followed, and the repairing performance of contaminants is improved. Specifically, when the contaminant collector is used for the connection end face, of the optical fiber optical connector, from which the guide pin protrudes, it is possible to follow the shape of the guide pin, and the cleaning effect of the guide pin and the optical connector connection end face can be remarkable.

The hysteresis loss of the contaminant collector of the present invention is measured by the method described in JIS K 7312: 1996 "Physical test method for thermosetting polyurethane elastomer molded product". The measurement is performed by a tensile hysteresis test using a material testing machine. At this time, the shape of the test piece is a dumbbell-shaped No. 3 test piece, the crosshead speed of the material testing machine is set to 1000 mm/min, and the hysteresis loss after 30 cycles of tension and compression are repeated is measured.

### ««Cleaning device (application of contaminant collector) »»

The application of the contaminant collector of the present invention is a cleaning device that cleans an object to be cleaned by bringing the contaminant collector into contact with the contaminant as described later, and the object to be cleaned is not particularly limited. Since the cleaning device of the present invention can clean minute contaminants, the cleaning device is suitable for cleaning a severe electronic device in which the minute contaminants cause a defect, particularly, a connection end face of an optical fiber optical connector. In addition, since the contaminant collector of the present invention is excellent in shape followability, it is more suitable for cleaning a connection end face, of an optical fiber optical connector, from which a guide pin protrudes.

Hereinafter, a specific execution mode example of a cleaning device for an end face of an optical connector, which is a preferred example, will be described in detail.

In the present application, "puncture" means pushing a pin in. When the pin is pushed in, a portion, of the contaminant collector, in which the pin is pushed is recessed following the shape of the pin, and the contaminant collector after the pin is pulled out has no recess and returns to its original shape.

### <<<First embodiment>>>

### << first execution mode>>

According to a first execution mode, provided is an optical connector cleaning device (for example, a cleaning device 10 to be described later or the like) including
a main body (for example, a housing 100 to be described later or the like) housing a supply holder (for example, a supply reel 200 to be described later or the like) to which a cleaning body (for example, a cleaning body CT to be described later, or the like) for cleaning a surface to be cleaned is suppliably held, where the cleaning body has a contaminant collector (for example, a contaminant collector RL to be described later or the like) capable of collecting and holding contaminants,
a cleaning head (for example, a cleaning head 410 to be described later or the like) on which a cleaning body supplied from the main body is positioned, the cleaning head being held at a constant holding position with respect to the main body,
a control body (for example, a winding control body 500 to be described later or the like) that is engageable with the optical connector and that is displaceable from a first position to a second position different from the first position with respect to the cleaning head while maintaining a state of being engaged with the optical connector, and
a supply mechanism (for example, a rack 536, a ratchet gear 322 to described later or the like) that transmits a motion in which the control body is displaced from the first position to the second position to the cleaning body to displace the cleaning body and supply the cleaning body to the cleaning head,
wherein when the control body is located at the first position, the cleaning head is away from an end face of the optical connector,
wherein the cleaning body is displaced by the supply mechanism while the control body is displaced from the first position to the second position, and
wherein when the control body is located at the second position, the cleaning head comes into contact with the end face of the optical connector.

The optical connector cleaning device includes a main body, a cleaning head, and a supply mechanism.

The main body houses the supply holder of the cleaning body. The cleaning body is a member for cleaning an end face of the optical connector. The cleaning body has a contaminant collector capable of holding contaminants. By pressing the contaminant retainable layer against the end face of the optical connector, contaminants (such as dust) present on the end face of the optical connector can be transferred and attached to the contaminant retainable layer to remove the contaminants from the end face of the optical connector. The supply holder holds the cleaning body so that the cleaning body can be supplied (can be fed).

The cleaning body preferably has an elongated shape. The cleaning body preferably has flexibility. For example, it can be formed in a band shape or a tape shape. The cleaning body may be any body that can be housed in the supply holder in a suppliable manner. The size and shape of the cleaning body can be appropriately selected as long as the cleaning body can be supplied from the main body to the cleaning head to clean the surface to be cleaned.

The cleaning head is away from the main body and held in a constant holding position relative to the main body. The cleaning head is held in an immovable position with respect to the main body. The cleaning body supplied from the main body is positioned at the cleaning head. In this way, at the time of the cleaning work, the cleaning head hardly changes in the relative position and the relative distance to the main body, so that the cleaning body can be pressed against the end face of the optical connector while keeping the optical connector cleaning device (the main body, the cleaning head, or the like) in a constant posture, and the contaminants can be accurately transferred and attached from the end face of the optical connector to the contaminant collector.

In addition, by making the cleaning head an elastic body for, for example, even when the end face of the optical connector is finished by so-called "8° polishing" and the angle between a guide pin GP and the end face is not a right angle, the cleaning head can follow the shape of the surface of the end face and clean the surface of the end face uniformly and without inconsistencies. More specifically, by using a material (elastic body or the like) softer than the material used for the optical connector end face and the main body between the optical connector end face of the cleaning head and the main body, it is possible to make the conveyability of the cleaning body, the followability of the contaminant collector to the object to be cleaned, and the property of contact with the 8° polished end face excellent.

The control body may engage the optical connector. For example, when the operator brings the optical connector cleaning device close to the optical connector, the control body can be engaged with the optical connector. The control body can be displaced from the first position to the second position relative to the cleaning head. The first position and the second position are away from each other. The control body may be displaced relative to the cleaning head, and may not be displaced with respect to the optical connector.

The supply mechanism transmits a motion in which the control body is displaced from the first position to the second position to the cleaning body. The cleaning body is displaced by the transmitted motion and supplied to the cleaning head.

When the control body is located at the first position, the cleaning head is away from the end face of the optical connector. That is, when the control body is located at the first position, the optical connector is not yet cleaned by the cleaning body.

While the control body is displaced from the first position to the second position, the cleaning body is displaced by the supply mechanism. When the cleaning body is displaced between the first position and the second position, the control body is displaced, and the clean cleaning body can be supplied to the cleaning head.

Since the cleaning head comes into contact with the end face of the optical connector when the control body is located at the second position, the end face of the optical connector can be cleaned by bringing the clean cleaning body into contact with the end face of the optical connector.

That is, in the optical connector cleaning device according to the first execution mode, when the control body is located at the first position, the cleaning head is away from the end face of the optical connector, and the cleaning body is displaced while the control body is displaced from the first position to the second position, and when the control body is located at the second position, the cleaning head comes into contact with the end face of the optical connector.

When the control body is displaced, the motion of the control body is transmitted to the cleaning body via the supply mechanism, and the cleaning body is supplied from the main body to the cleaning head.

Further, when the control body is located at the first position, the cleaning head may be away from the end face of the optical connector, and when the control body is located at the second position, the cleaning head may contact the end face of the optical connector, and the cleaning head may gradually approach the end face of the connector while the control body is displaced from the first position to the second position.

### «Second execution mode»

A second execution mode further includes, in the first execution mode,
a head holder (for example, a head holder 420 to be described later or the like) provided at a constant position with respect to the main body and having a constant shape, and
the cleaning head is provided at a constant position of the head holder, and is held at the holding position with respect to the main body.

The head holder has a constant shape. That is, the head holder does not change in shape due to displacement of the control body, a supply mechanism, or the like, and does not change in shape with time. The head holder preferably has a constant size.

Furthermore, the head holder is provided at a substantially constant position with respect to the main body. That is, the head holder does not change in position due to displacement of the control body, a supply mechanism, or the like, and does not change in position with time.

The cleaning head is provided at a constant position of the head holder. By doing so, the cleaning head is held at a constant holding position with respect to the main body. Therefore, even in a state where the control body is displaced or in a state or even in a state where the supply mechanism is operated, the cleaning head maintains a state of being held at a constant holding position with respect to the main body. The cleaning head is disposed so as to project from the head holder and be exposed.

The head holder may be configured separately from or integrally with the main body. When configured separately, assembly and maintenance can be facilitated. When integrated, the assembly process can be omitted.

### «Third execution mode»

In a third execution mode is, the head holder linearly guides the cleaning body supplied from the main body toward the cleaning head in the second execution mode.

The head holder also functions as a guide member that guides the cleaning body from the main body to the cleaning head. Since the cleaning body has the contaminant collector, it is necessary to prevent the cleaning body from being contaminated in the process of being guided to the cleaning head. Therefore, the head holder guides the cleaning body in a linear shape (planar shape) without curving or bending the cleaning body until the cleaning body is guided to the cleaning head. In this way, the cleaning body can be supplied to the cleaning head at the shortest time without contact of the head holder or other members, and contamination of the cleaning body can be prevented.

### «Fourth execution mode»

A fourth execution mode further includes, in the third execution mode,
a collection holder (for example, a winding reel 300 to be described later or the like) that collects and holds the cleaning body supplied to the cleaning head, and the supply mechanism transmits the motion of the control body to the collection holder to cause the collection holder to collect the cleaning body, tows the cleaning body along with the collection of the cleaning body, and supplies the cleaning body from the main body to the cleaning head.

The collection holder collects and holds the cleaning body supplied to the cleaning head. Further, the supply mechanism transmits the motion of the control body to the collection holder, causes the collection holder to collect the cleaning body, and tows the cleaning body along with the collection motion of the cleaning body. That is, first, the supply mechanism transmits the motion of the control body to the collection holder, and the collection holder collects the cleaning body. The cleaning body is towed by the motion of collecting the cleaning body, the towing motion is transmitted to the supply holder via the cleaning body, and the cleaning body held by the supply holder is supplied toward the cleaning head. The cleaning body is preferably formed integrally and continuously from the supply holder to the collection holder via the cleaning head. The cleaning body is supplied from the supply holder to the cleaning head, and is collected from the cleaning head and held by the collection holder after the contaminants are transferred and attached by cleaning the end face of the optical connector. In this way, the cleaning body having the contaminant collector in a clean state is supplied to the cleaning head, and the cleaning body contaminated by the contaminants being transferred and attached by cleaning the end face of the optical connector is collected to the collection holder, so that the clean cleaning body can constantly be positioned at the cleaning head.

### «Fifth execution mode»

A fifth execution mode further includes, in the first execution mode,
a biasing force generation unit (for example, a coil spring 140 to be described later or the like) that applies a biasing force for returning the control body to the first position (for example, a maximum front position MF to be described later or the like) to the control body, and
the biasing force generation unit is disposed at a position away from a movement path of the cleaning body.

The biasing force generation unit applies a biasing force to the control body to return the control body to a home position. The biasing force generation unit is disposed at a position away from the movement path of the cleaning body. The movement path of the cleaning body is a path from the supply holder to the collection holder via the cleaning head.

By disposing the biasing force generation unit at a position away from the movement path of the cleaning body, it is possible to prevent the contaminants generated by the motion of the biasing force generation unit from attaching to the contaminant collector or the like of the cleaning body, maintain the cleanliness of the contaminant collector or the like, and supply the contaminant collector or the like to the cleaning head.

Further, it is preferable that the biasing force generation unit is disposed at a position away from the head holder. The contaminants generated by the motion of the biasing force generation unit hardly reach the head holder, and can be prevented from attaching to the contaminant collector or the like of the cleaning body.

### «Sixth execution mode»

The cleaning body is preferably long and flexible, and may be in the form of a film, a nonwoven fabric, a woven fabric, or the like. The cleaning body may be any body that can transfer and attach, and remove contaminants. The cleaning body is preferably formed integrally and continuously along the longitudinal direction. Furthermore, the cleaning body preferably has a coating film that coats the contaminant collector in a peelable manner.

### «Seventh execution mode»

The supply holder may be housed so as to be capable of feeding out the cleaning body. The supply holder stores the cleaning body in the accommodation space, and feeds out the cleaning body from the accommodation space. Furthermore, the supply holder is preferably a rotating body rotatable about a first rotation shaft (for example, a rear projecting portion 118 to be described later or the like). The cleaning body is wound around and held by the supply holder, and unwound according to the rotation of the supply holder and gradually fed out from the supply holder. When being wound and held by the supply holder, the contaminant collector is covered by adjacent overlapping cleaning body. When the winding of the cleaning body is released, the cleaning body that is adjacent and overlapped is separated, and the contaminant collector is exposed.

### «Eighth execution mode»

The collection holder may store and collect the cleaning body. The collection holder is stored in an accommodation space for housing the cleaning body. Furthermore, the collection holder is preferably a rotating body rotatable about a second rotation shaft (for example, a front projecting portion 116 to be described later or the like) different from the first rotation shaft. The second rotation shaft is preferably located away from the first rotation shaft. The second rotation shaft is preferably parallel to the first rotation shaft. The first rotation shaft and the second rotation shaft may be coaxial. When the first rotation shaft and the second rotation shaft are coaxial, the supply holder and the collection holder are disposed in parallel to each other. Even when the first rotation shaft and the second rotation shaft are not disposed in parallel, the supply holder may feed out the cleaning body, and the collection holder may accommodate the cleaning body. The cleaning body is gradually wound and collected according to the rotation of the supply holder.

### «Ninth execution mode»

The head holder has an elongated shape, the head holder is disposed so as to project from the main body, and a position at which the head holder projects from the main body and is most distant is a holding position for holding the cleaning head. The cleaning head can be brought close to the optical connector from a gap of various cables such as an optical cable disposed.

### «Tenth execution mode»

The head holder has a hollow shape, the cleaning body is movably disposed inside the head holder, and the control body can be displaced along the longitudinal direction of the head holder and outside the head holder. Since the cleaning body is disposed inside the head holder and the control body is displaced outside the head holder, the cleaning body is not contaminated by the operation of the control body, so that the cleanliness of the contaminant retainable layer can be maintained. The control body preferably has an elongated shape.

### «Eleventh execution mode»

The head holder has both a supply path through which the cleaning body fed out from the supply holder moves toward the cleaning head and a collection path through which the cleaning body having passed through the cleaning head moves toward the collection holder. The supply path and the collection path are located in parallel in the head holder. In the present embodiment, the fact that the supply path and the collection path are parallel in the head holder means that the variation range of the interval between the supply path and the collection path in the head holder has a variation ratio of within 1/10 (1/10) with respect to the movement distance of the supply path and the movement distance of the collection path.

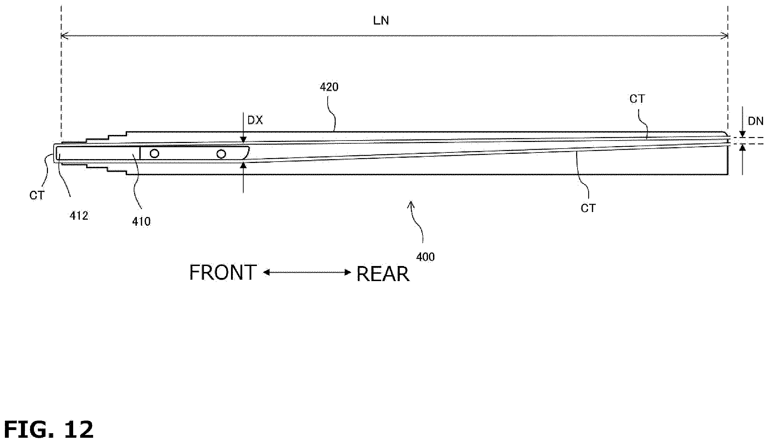

That is, when (maximum interval between the supply path and the collection path in head holder - minimum interval between the supply path and the collection path in head holder)/(movement distance of the supply path) ≤ 1/10 and (maximum interval between the supply path and the collection path in head holder - minimum interval between the supply path and the collection path in head holder)/(movement distance of the collection path) ≤ 1/10 are satisfied, the supply path and the collection path are parallel to each other. The maximum interval between the supply path and the collection path in the head holder is, for example, DX illustrated in Fig. 12 to be described later, and the minimum interval between the supply path and the collection path in the head holder is, for example, DN illustrated in Fig. 12 to be described later. The movement distance of the supply path and the movement distance of the collection path are, for example, LN illustrated in Fig. 12 to be described later.

As described above, by making the supply path and the collection path of the cleaning body parallel in the head holder, the head holder can be thinned, and even in an environment where a large number of cables such as optical cables are disposed, the cleaning head can be brought close to the optical connector using the gap of the cables.

### «Twelfth execution mode»

As described above, the biasing force generation unit is disposed at a position away from the movement path of the cleaning body. More specifically, the biasing force generation unit is disposed at a position different from the head holder. More specifically, the biasing force generation unit is disposed at a position away from the supply path and the collection path in the head holder.

The biasing force generation unit is disposed at a position away from the cleaning head with the head holder interposed therebetween. In other words, the biasing force generation unit and the cleaning head are disposed at positions away from each other with the head holder interposed therebetween. Even when contaminants are generated by the motion of the biasing force generation unit, the contaminants are less likely to reach the cleaning head, so that the cleaning body supplied to the cleaning head can be kept clean.

Further, the biasing force generation unit is disposed at a position parallel to a line connecting the first rotation shaft of the supply holder and the second rotation shaft of the collection holder and adjacent to the supply holder and the collection holder.

The longitudinal direction of the head holder and the control body is parallel to a line connecting the first rotation shaft of the supply holder and the second rotation shaft of the collection holder. The head holder and the control body are disposed coaxially.

Furthermore, the displacement direction of the biasing force generation unit is the same as the displacement direction of the control body. The biasing force generated in the biasing force generation unit can be accurately transmitted to the control body.

### <<<<<Details of Present Embodiment>>>>>

Hereinafter, embodiments will be described with reference to the drawings.

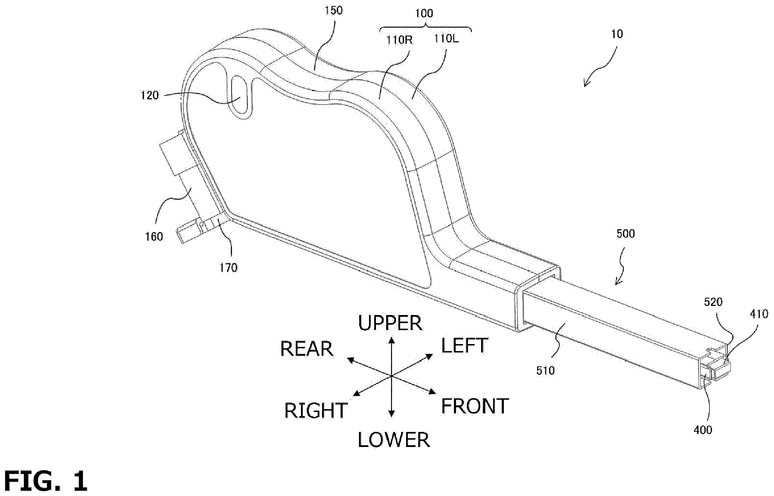

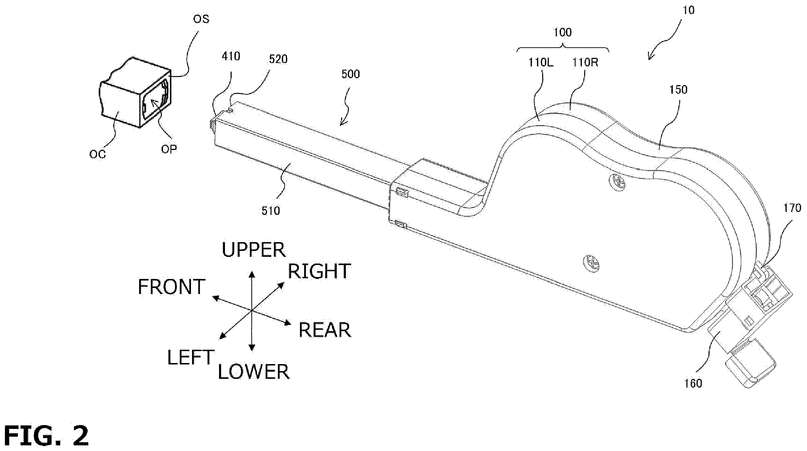

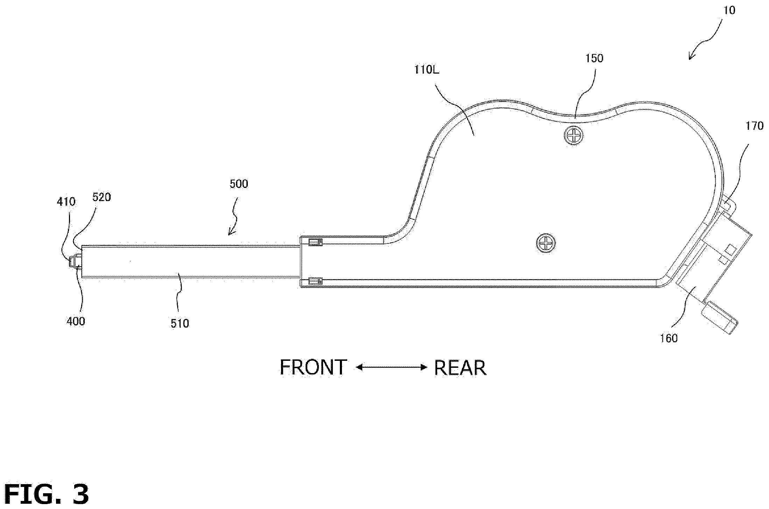

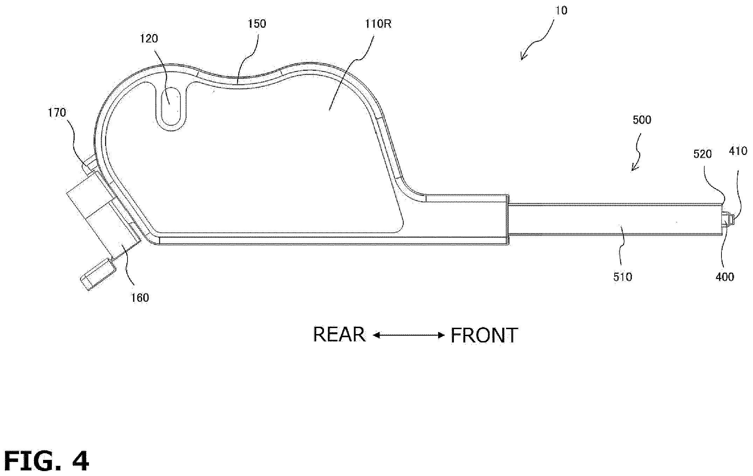

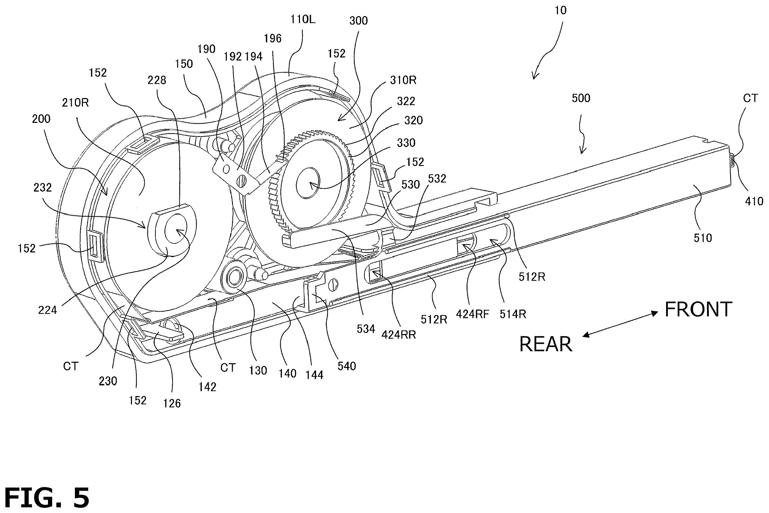

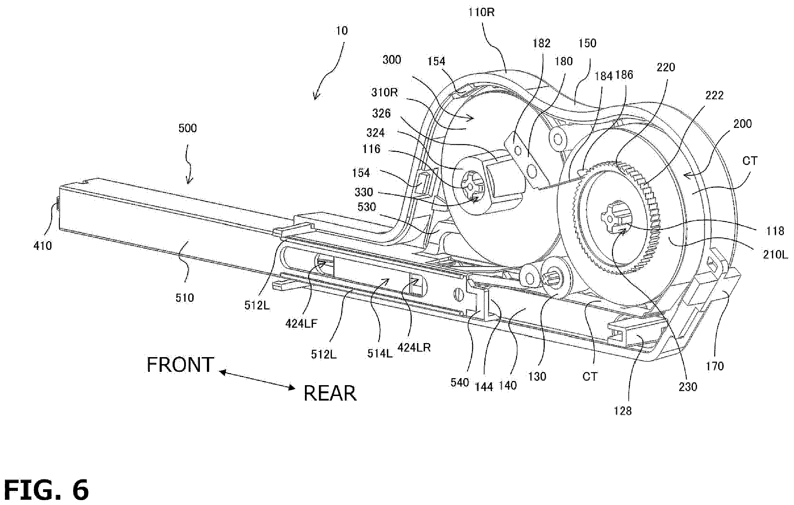

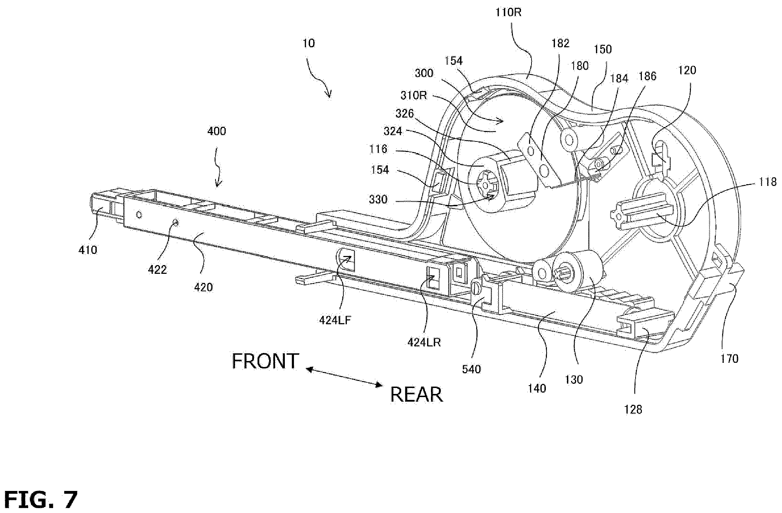

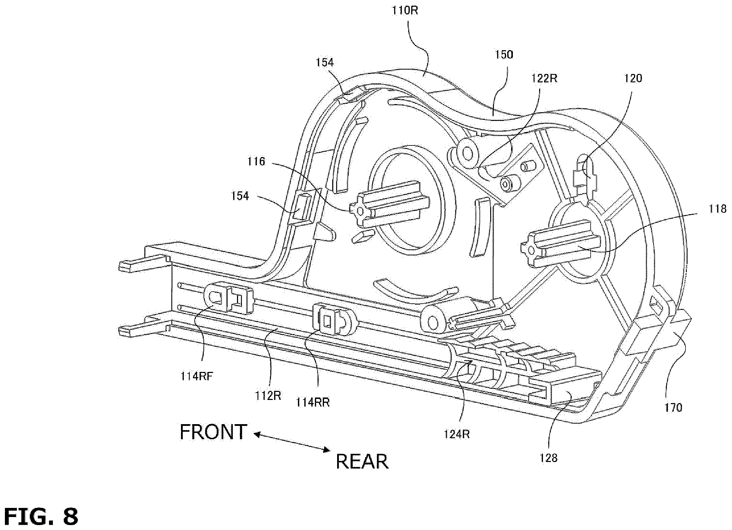

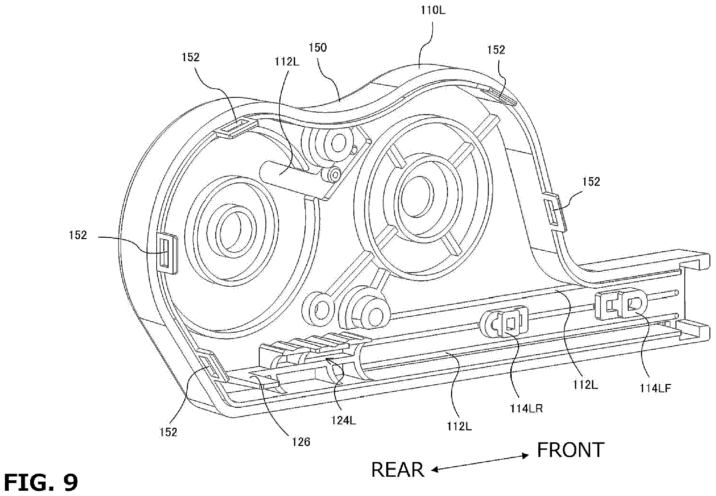

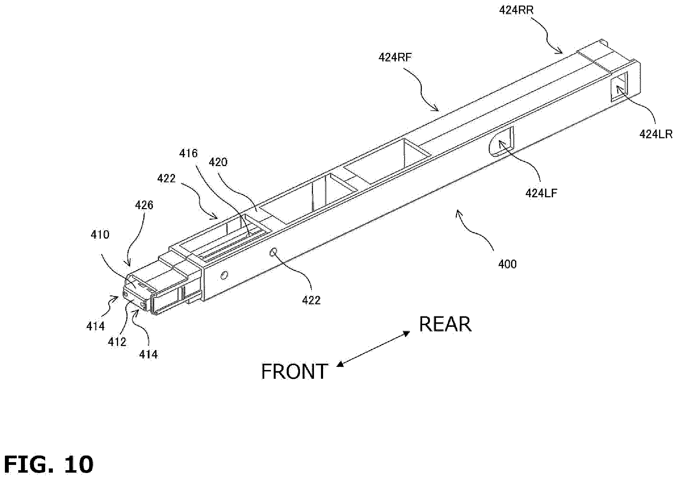

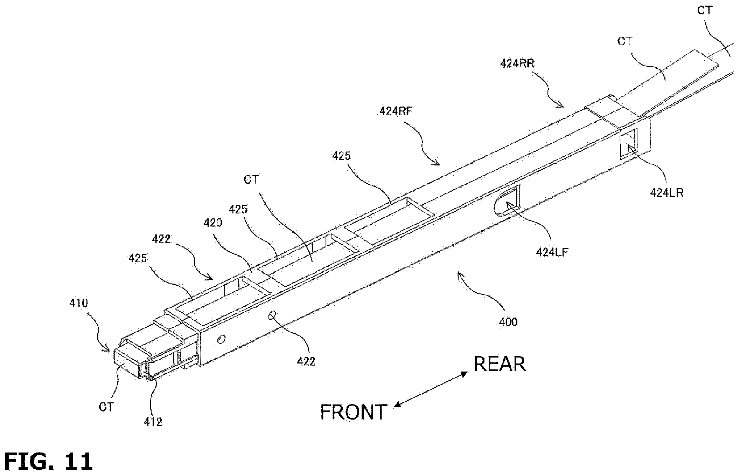

Fig. 1 is a perspective view schematically illustrating an entire cleaning device 10 according to the present embodiment. Fig. 2 is a perspective view illustrating an overall outline of the cleaning device 10 and an optical connector OC according to the present embodiment. Fig. 3 is a side view illustrating a left side face of the cleaning device 10 according to the present embodiment. Fig. 4 is a side view illustrating a right side face of the cleaning device 10 according to the present embodiment. Fig. 5 is a perspective view illustrating a state in which a right housing 110R of the cleaning device 10 according to the present embodiment is removed. Fig. 6 is a perspective view illustrating a state in which a left housing 110L of the cleaning device 10 according to the present embodiment is removed. Fig. 7 is a perspective view illustrating a state in which a supply reel 200 and a winding reel 300 of the cleaning device 10 according to the present embodiment are removed. Fig. 8 is a perspective view illustrating a configuration of the right housing 110R of the cleaning device 10 according to the present embodiment. Fig. 9 is a perspective view illustrating a configuration of the left housing 110L of the cleaning device 10 according to the present embodiment. Fig. 10 is a perspective view illustrating a configuration of a head 400 (head 400 and head holder 420) of cleaning device 10 according to the present embodiment. Fig. 11 is a perspective view illustrating a path of a cleaning body CT in the head 400 of the cleaning device 10 according to the present embodiment. In Figs. 5 to 9, a cap 160 is omitted for convenience.

### <<<<Cleaning device 10>>>>

The cleaning device 10 is an optical connector cleaning device (cleaning tool) for cleaning an end face of a ferrule of the optical connector using a cleaning body CT.

### <<<Direction>>>

Directions used in the present specification will be described (see Figs. 1 and 2).

### <Front/rear/longitudinal>

A side or a direction in which the cleaning head 410 of the cleaning device 10 is located is defined as a front side or a front direction, and a side or a direction in which the housing 100 is located is defined as a rear side or a rear direction. The front-rear direction may be referred to as a longitudinal direction of the head 400.

### <Right/left>

A right side or a direction when viewed from the rear side to the front side is referred to as a right side or a right direction, and a left side or a direction when viewed from the rear side to the front side is referred to as a left side.

### <Lower/upper>

In addition, a side or a direction in which the coil spring 140 is located is referred to as a lower side, a downward direction, or a lower portion, and a side or a direction in which the supply reel 200 or the winding reel 300 is located is referred to as an upper side, an upward direction, or an upper portion.

### <Up stream/down stream>

A side on which the cleaning body CT is fed and supplied is referred to as upstream, and a side on which the cleaning body CT is wound is referred to as downstream. The supply reel 200 to be described later is located upstream, and the winding reel 300 is located downstream.

### <Cleaning body CT>

The cleaning body CT is long and flexible, and has at least a contaminant collector, and the contaminant collector comes into contact with the connector end face and the guide pins GP to remove dirt such as dust. The cleaning body CT has, for example, an integral and continuous tape-like shape.

The width of the cleaning body CT is not particularly limited, but when at least the object to be cleaned is the end face of the optical connector, the width of the cleaning body CT can be equal to or larger than the width of the end face ES of a ferrule FE of the optical connector, or can be equal to or larger than the width including the guide pins GP.

The thickness of the cleaning body CT is not particularly limited, but can be, for example, 0.05 mm to 2 mm.

The cleaning body CT may be a contaminant collector alone or may be laminated on the substrate. Further, a release film may be laminated. The substrate can be used as a support material when the cleaning body CT cannot be supported by the contaminant collector alone. The release film can be used to protect the cleaning face of the cleaning body CT from dirt and damage while the cleaning device 10 of the present invention is not used.

The cleaning body CT is fed to the cleaning body head, and is brought into contact with the end face ES and the guide pins GP of the ferrule FE of the optical connector on the cleaning body head. At this time, the substrate is laminated on the surface, of the contaminant collector, in contact with the cleaning body head. In addition, the release film is laminated on the surface, of the contaminant collector, opposite the substrate. The release film is released before the cleaning body CT reaches the cleaning body head, and is removed from the cleaning body CT.

The material of the substrate is not particularly limited, and a known material can be used. For example, resins such as synthetic resins and natural resins, rubbers such as natural rubbers and synthetic rubbers, and fibers such as natural fibers and synthetic fibers, and fiber and paper formed into a sheet shape can be used. Any of these materials can be used as long as it does not impair the effect of the present invention. For example, an extrusion-molded sheet of a resin, narrow cutting process of a resin sheet, twisting of fibers, knitting of fibers (mesh material, woven fabric, and the like), laminated fabric, nonwoven fabric, paper, and the like can be used.

As the knitting of the fibers, for example, a mesh material having a network structure with a mesh opening of about 0.5 to 2.0 mm can be used.

When the cleaning body CT and the optical connector come into contact with each other, the contaminant collector of the cleaning body CT is deformed so as to follow the shapes of the guide pin GP and the hole. The substrate may follow the shapes of the guide pin GP and the hole similarly to the contaminant collector, or may be penetrated without following the shapes.

When the substrate follows the shapes of the guide pin GP and the hole, the substrate is required to have flexibility, and thus, a thin resin film, an olefin-based synthetic resin, or a polyvinyl chloride-based synthetic resin is suitable.

On the other hand, in a case where the guide pin GP penetrates the substrate when the cleaning body CT and the optical connector come into contact with each other, it is preferable to use a substrate having a structure that is easily penetrated or a material that is easily penetrated, and for example, a woven fabric of fibers configured in a net shape, a laminated fabric, a nonwoven fabric, a thin resin film, or the like can be suitably used.

When a material including voids such as a woven fabric of fibers, a laminated fabric or a nonwoven fabric is used as the substrate, part of the contaminant collector can enter (is impregnated into) the voids of the substrate. Such a state strengthens the adhesion between the substrate and the contaminant collector. Therefore, there is an advantage in that a state of adhesive residue in which when the end face ES of the ferrule FE and the guide pin GP of the optical connector are detached from the cleaning body CT, the contaminant collector is separated from the substrate and attaches to the end face ES and the guide pin GP of the ferrule FE of the optical connector is less likely to occur.

As a substrate made of a material that is easily penetrated, paper, a nonwoven fabric, a woven fabric, or a resin film can be suitably used. The resin which is easily penetrated is not particularly limited, but a resin which easily breaks after exhibiting a certain elongation like a polyolefin resin such as a polyethylene resin, a resin subjected to easy cutting processing like a polypropylene resin (PP) or a polyethylene terephthalate resin (PET) which is uniaxially or biaxially stretched, and the like can be suitably used.

A known material can be used for the release film, and is not particularly limited. A surface, of the release film with a sheet-like material such as a resin film or paper, toward the contaminant collector may be subjected to peeling processing. The peeling processing is not particularly limited, and examples thereof include a method of applying a peeling agent such as dimethylsiloxane.

### ««Configuration of cleaning device 10»>

The cleaning device 10 mainly includes a housing 100, a supply reel 200, a winding reel 300, a head 400, and a winding control body 500. The housing 100, the supply reel 200, the winding reel 300, the head 400, and the winding control body 500 are formed of ABS resin (acrylonitrile, butadiene, styrene copolymer synthetic resin), polyacetal (POM) resin, or the like.

### <<<Housing 100>>>

The housing 100 rotatably holds the supply reel 200 and the winding reel 300. The housing 100 houses the supply reel 200 and the winding reel 300 along the front-rear direction. In the housing 100, the winding reel 300 is located on the front side, and the supply reel 200 is located on the rear side. The housing 100 has an elongated shape as a whole.

The housing 100 has a concave portion 150 in the region between the supply reel 200 and the winding reel 300, so that the operator can easily engage his/her finger with it, and the operator can accurately perform the operation.

The housing 100 includes the right housing 110R and the left housing 110L. A housing constituting the right portion of the housing 100 is a right housing, and a housing constituting the left portion of the housing 100 is a left housing. The right housing 110R has a locking claw 154, and the left housing 110L has a locking hole 152. The outer shape of the right housing 110R and the outer shape of the left housing 110L are formed approximately line-symmetrically. The right housing 110R and the left housing 110L face each other, and the locking claw of the right housing 110R is locked to the locking hole of the left housing 110L, whereby the housing 100 can be integrally formed.

### <<Right housing 110R>>

The right housing 110R is a housing constituting a right portion of the housing 100.

### <Guide groove 112R>

The right housing 110R has two guide grooves 112R at a lower portion. When the guide groove 112R is engaged with a guiding ridge 512R formed on the right side face of the winding control body 500, the winding control body 500 can be moved while being guided in the front-rear direction.

### <Stopper 114RF and Stopper 114RR>

The stopper 114RF is disposed at the front of the lower portion of the right housing 110R, and the stopper 114RR is disposed at the rear of the lower portion of the right housing 110R. The stopper 114RF defines the maximum front position MF of the winding control body 500 and the stopper 114RR defines the maximum rear position MR of the winding control body 500.

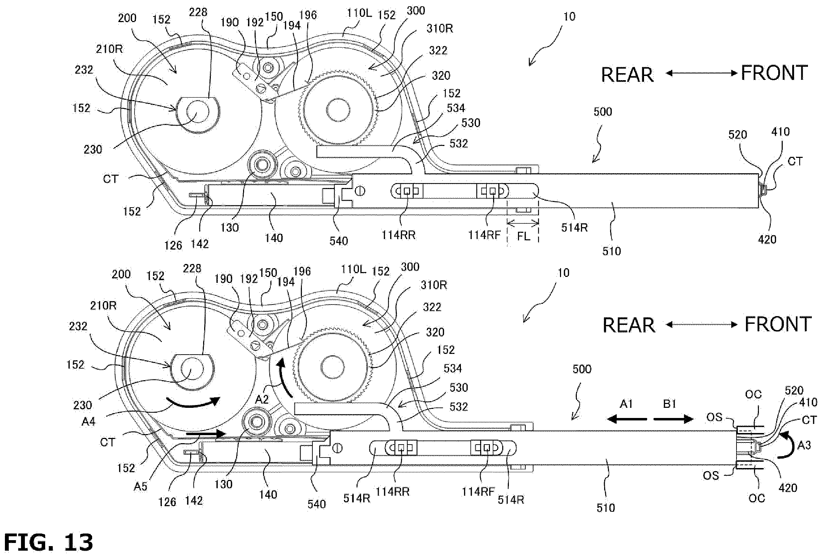

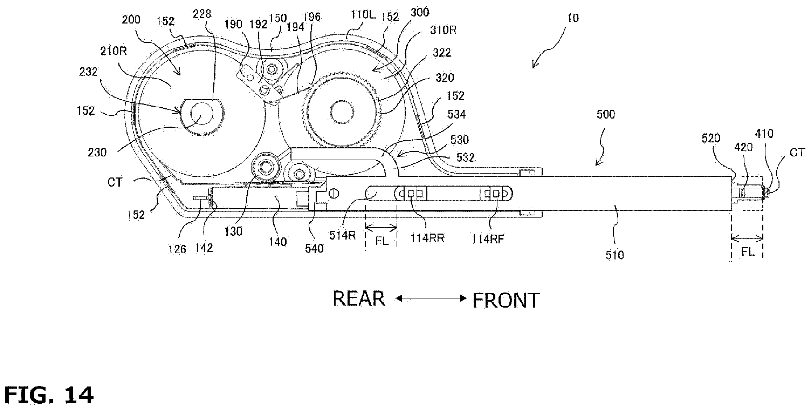

The stopper 114RF and the stopper 114RR can be engaged with a movement control hole 514R formed on the right side of the winding control body 500 to stop the winding control body 500 at the maximum front position MF (a state of Fig. 13(a) described later) or stop the winding control body 500 at the maximum rear position MR (a state of Fig. 14 described later).

The stopper 114RF is engaged with a front locking hole 424RF formed on the right side face of the head holder 420, and the stopper 114RR is engaged with a rear locking hole 424RR formed on the right side face of the head holder 420 to lock the head holder 420 to the housing 100.

### <Front projecting portion 116 and rear projecting portion 118 (rotatably held)>

The front projecting portion 116 and the rear projecting portion 118 are formed so as to project rightward. The through hole 330 of the winding reel 300 is inserted into the front projecting portion 116, and the front projecting portion 116 rotatably holds the winding reel 300. The through hole 230 of the supply reel 200 is inserted into the rear projecting portion 118, and the rear projecting portion 118 rotatably holds the supply reel 200.

### <Remaining amount confirmation window 120>

A remaining amount confirmation window 120 is a through hole for visually recognizing the amount (remaining amount) of the remaining cleaning body CT wound around the supply reel 200. The operator can confirm the remaining amount of the cleaning body CT and proceed with the operation.

### <Pawl holding portion 122R>

A pawl holding portion 122R is formed in a recessed shape (recessed shape), and can house and hold a fixed end 192 of a winding reel pawl 190. The fixed end 192 of the winding reel pawl 190 is fixed to the pawl holding portion 122R.

### <Spring holding portion 124R>

A spring holding portion 124R faces a spring holding portion 124L to be described later and stretchably holds the coil spring 140. Specifically, even when the coil spring 140 is contracted, the coil spring 140 can be stably held while maintaining the cylindrical shape.

### <Spring locking housing portion 128>

A spring locking housing portion 128 houses a spring locking portion 126 formed in the left housing 110L described later. By covering the spring locking portion 126 with the spring locking housing portion 128, it is possible to prevent a fixed end 142, of the coil spring 140, locked to the spring locking portion 126 from being detached from the spring locking portion 126.

### <<Left housing 110L>>

### <Guide groove 112L>

The left housing 110L has two guide grooves 112L at a lower portion.

When the guide groove 112L is engaged with a guiding ridge 512L formed on the left side face of the winding control body 500, the winding control body 500 can be moved while being guided in the front-rear direction.

### <Stopper 114LF and Stopper 114LR>

A stopper 114LF is disposed at the front of the lower portion of the left housing 110L, and a stopper 114LR is disposed at the rear of the lower portion of the left housing 110L. Similarly to a stopper 114RF and a stopper 114RR, they define the maximum front position MF and the maximum rear position MR of the winding control body 500. The stopper 114LF defines the maximum front position MF of the winding control body 500, and the stopper 114LR defines the maximum rear position MR of the winding control body 500.

The stopper 114LF and the stopper 114LR can be engaged with a movement control hole 514L formed on the left side of the winding control body 500 to stop the winding control body 500 at the maximum front position MF and stop the winding control body 500 at the maximum rear position MR.

The stopper 114LF is engaged with a front locking hole 424LF formed on the left side face of the head holder 420, and the stopper 114LR is engaged with a rear locking hole 424LR formed on the left side face of the head holder 420 to lock the head holder 420 to the housing 100.

### <Pawl holding portion 122L>

A pawl holding portion 122L is formed in a recessed shape (recessed shape), and can house and hold a fixed end 182 of a supply reel pawl 180. The fixed end 182 of the supply reel pawl 180 is fixed to the pawl holding portion 122L.

### <Spring holding portion 124L>

As described above, the spring holding portion 124L faces the spring holding portion 124R and stretchably holds the coil spring 140.

### <Spring locking portion 126>

The spring locking portion 126 locks the fixed end 142 of the coil spring 140. The spring locking portion 126 can stably hold the coil spring 140 even when the coil spring 140 expands and contracts. The spring locking portion 126 is housed in the spring locking housing portion 128 formed in the right housing 110R described above. The fixed end 142 of the coil spring 140 can be prevented from being detached from the spring locking portion 126.

### «Cleaning body guide roller 130»

A cleaning body guide roller 130 is rotatably provided between the supply reel 200 and the winding reel 300. The cleaning body guide roller 130 has a substantially cylindrical shape. The cleaning body guide roller 130 contacts the cleaning body CT to curve the cleaning body CT, and changes the moving direction of the cleaning body CT. Specifically, the cleaning body CT fed from the supply reel 200 can be changed in a constant direction and guided toward the cleaning head 410. By adjusting the cleaning body CT to be directed in a constant direction, the cleaning body CT can be stably fed toward the cleaning head 410 without depending on the remaining amount of the cleaning body CT wound around the supply reel 200.

### «Coil spring 140»

The coil spring 140 is a spring formed in a coil shape and is formed to be stretchable. In each drawing, the coil spring 140 is illustrated in a columnar shape for convenience. The coil spring 140 generates a biasing force according to a state of expansion and contraction. The coil spring 140 has two ends, a fixed end 142 and a moving end 144. The fixed end 142 is locked to the spring locking portion 126 of the left housing 110L. The moving end 144 is engaged with a coil spring pressed portion 540 of the winding control body 500. When the winding control body 500 moves to the rear side, the coil spring 140 contracts, and when the winding control body 500 moves to the front side, the coil spring 140 expands. The coil spring 140 applies a biasing force to the winding control body 500.

### «Supply reel pawl 180»

The supply reel pawl 180 has a leaf spring structure and has the fixed end 182 and a leaf spring 184. The fixed end 182 is fixed to the pawl holding portion 122L of the left housing 110L. The leaf spring 184 has an elongated shape, and can be bent and elastically deformed in a direction perpendicular to the longitudinal direction.

The leaf spring 184 has an engagement end 186 at its tip. The engagement end 186 has a bent shape. The engagement end 186 engages with a ratchet gear 222 of a pinion body 220 of the supply reel 200. The leaf spring 184 functions as a ratchet pawl. The ratchet mechanism of the leaf spring 184 will be described later.

### «Winding reel pawl 190»

The winding reel pawl 190 has a leaf spring structure and has the fixed end 192 and a leaf spring 194. The fixed end 192 is fixed to the pawl holding portion 122R of the right housing 110R. The leaf spring 194 has an elongated shape, and can be bent and elastically deformed in a direction perpendicular to the longitudinal direction.

The leaf spring 194 has an engagement end 196 at its tip. The engagement end 196 has a bent shape. The engagement end 196 is engaged with a ratchet gear 322 of a pinion body 320 of the winding reel 300. The leaf spring 194 functions as a ratchet pawl. The ratchet mechanism of the leaf spring 194 will be described later.

### «Cap 160 and Cap holding portion 170»

The cap 160 is a covering body for detachably covering the cleaning head 410. By covering the cleaning head 410 with the cap 160, contamination of a contaminant collector RL of the cleaning body CT can be prevented. Alternatively, the housing 100 has a cap holding portion 170 at a rear portion. When performing the cleaning operation with the cleaning device 10, it is necessary to detach the cap 160 from the cleaning head 410. By attaching the detached cap 160 to the cap holding portion 170, the operator can perform cleaning without holding the cap 160 by hand, and the cleaning operation can be simplified.

### <<<Supply reel 200>>>

The supply reel 200 mainly includes a left supply reel frame 210L and a right supply reel frame 210R. An unused cleaning body CT is wound between the left supply reel frame 210L and the right supply reel frame 210R so as to be able to be fed (can be supplied).

### «Left supply reel frame 210L»

The left supply reel frame 210L has a substantially disk shape. The left supply reel frame 210L mainly includes the pinion body 220, a fixing portion 224, and a through hole 230.

### <Pinion body 220>

The left supply reel frame 210L includes the pinion body 220. The pinion body 220 is formed at the outside of the left supply reel frame 210L (facing the left housing 110L). The pinion body 220 has a substantially cylindrical shape with a low height. The pinion body 220 is formed integrally and coaxially with the left supply reel frame 210L. The ratchet gear 222 is formed along an outer peripheral face of the pinion body 220.

The ratchet gear 222 is constituted by a row of teeth having asymmetric tooth faces. The tooth of the ratchet gear 222 includes a tooth face having a small pressure angle (a tooth face having a steep inclination (large inclination)) (hereinafter, referred to as a large inclined tooth face) and a tooth face having a large pressure angle (a tooth face having a gentle inclination (small inclination)) (hereinafter referred to as a small inclined tooth face) with the tooth tip interposed therebetween. The large inclined tooth face constitutes an engaging face, and the small inclined tooth face constitutes a slip face and a sliding face. A rotation direction (rotation permission direction) in which rotation of the supply reel 200 is permitted and a rotation direction (rotation prohibition direction) in which rotation is prohibited can be defined by the inclination of the tooth face. The ratchet gear 222 and the engagement end 186 of the supply reel pawl 180 described above constitute a ratchet mechanism (return prevention mechanism).

With the ratchet mechanism, the supply reel 200 can permit rotation in a first rotation direction (for example, clockwise) (rotation permitting direction) and prohibit rotation in a second rotation direction (for example, counterclockwise) opposite to the first rotation direction (rotation prohibiting direction).

### <Fixing portion 224>

The fixing portion 224 is formed so as to project from a center portion of the left supply reel frame 210L. In the supply reel 200, the fixing portion 224 is disposed toward the right supply reel frame 210R. The fixing portion 224 has a gap (not illustrated (similar to a gap 326 of a fixing portion 324 of the winding reel 300 described later)), and the cleaning body CT is fixed by sandwiching a first end (not illustrated) of the cleaning body CT on the longitudinal side in the gap. The fixing portion 224 has a flat portion 228 at a distal end, and can hold the right supply reel frame 210R.

The through hole 230 is formed at the center of the left supply reel frame 210L, and the rear projecting portion 118 of the right housing 110R is inserted into the through hole 230.

<Right supply reel frame 210R>

The right supply reel frame 210R has a substantially disk shape. A circular through hole 232 is formed at the center of the right supply reel frame 210R, and the fixing portion 224 of the left supply reel frame 210L is inserted into the through hole 232.

### <Function of supply reel 200>

The cleaning body CT is wound around a gap between the left supply reel frame 210L and the right supply reel frame 210R. When the supply reel 200 rotates, the unused cleaning body CT wound around the supply reel 200 can be gradually fed and

### fed toward the cleaning head 410. When the cleaning body is wound around and held by the supply reel 200, the contaminant collector is covered with the cleaning body CT which is adjacently overlapped. When the winding is released, the cleaning body CT which is adjacently overlapped is separated, and the contaminant collector is exposed.

### <<<Winding reel 300>>>

The winding reel 300 includes a right winding reel frame 310R. The used cleaning body CT is wound around the winding reel 300.

### <<Right winding reel frame 310R>>

The right winding reel frame 310R has a substantially disk shape. The right winding reel frame 310R mainly includes the pinion body 320, the fixing portion 324, and a through hole 330.

### <Pinion body 320>

The right winding reel frame 310R includes the pinion body 320. The pinion body 320 is formed at the outside of the right winding reel frame 310R (facing the right housing 110R). The pinion body 320 has a substantially cylindrical shape with a low height. The pinion body 320 is formed integrally and coaxially with the right winding reel frame 310R. The ratchet gear (ratchet gear) 322 is formed along an outer peripheral face of the pinion body 320.

The ratchet gear 322 is constituted by a row of teeth having asymmetric tooth faces. The tooth of the ratchet gear 322 includes a tooth face having a small pressure angle (a tooth face having a steep inclination) and a tooth face having a large pressure angle (a tooth face having a gentle inclination) with a tooth tip interposed therebetween. A rotation direction (rotation permission direction) in which the rotation of the winding reel 300 is permitted and a rotation direction (rotation prohibition direction) in which the rotation is prohibited can be defined by the inclination of the tooth face. The ratchet gear 322 and the engagement end 196 of the winding reel pawl 190 described above constitute a ratchet mechanism (return prevention mechanism).

With the ratchet mechanism, the winding reel 300 can permit rotation in a first rotation direction (for example, clockwise) (rotation permitting direction) and prohibit rotation in a second rotation direction (for example, counterclockwise) opposite to the first rotation direction (rotation prohibiting direction).

### <<Fixing portion 324>>

The fixing portion 324 is formed so as to project from the center portion of the right winding reel frame 310R. In the winding reel 300, the fixing portion 324 is disposed toward the left housing 110L. The fixing portion 324 has the gap 326, and the cleaning body CT is fixed by sandwiching a second end (not illustrated) of the cleaning body CT on the longitudinal side in the gap 326. The through hole 330 is formed at the center of the right winding reel frame 310R, and the front projecting portion 116 of the right housing 110R is inserted into the through hole 330.

In the present embodiment, there is no left winding reel frame, but a left winding reel frame may be provided. By providing the left winding reel frame, the cleaning body CT after being wound can be accurately held.

### <<<Head 400>>

The head 400 is disposed so as to project frontward from the housing 100. The head 400 includes the cleaning head 410 and the head holder 420.

### «Cleaning head 410»

The cleaning head 410 includes a contact portion 412 for bringing the cleaning body CT into contact with the end face ES of the ferrule FE of the optical connector OC. The contact portion 412 has a size and a shape according to the end face ES of the ferrule FE of the optical connector OC.

<Accommodation hole 414>

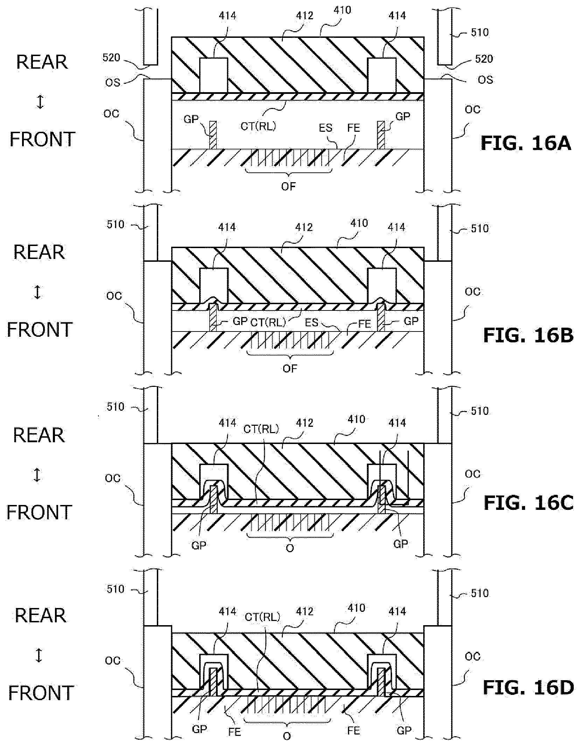

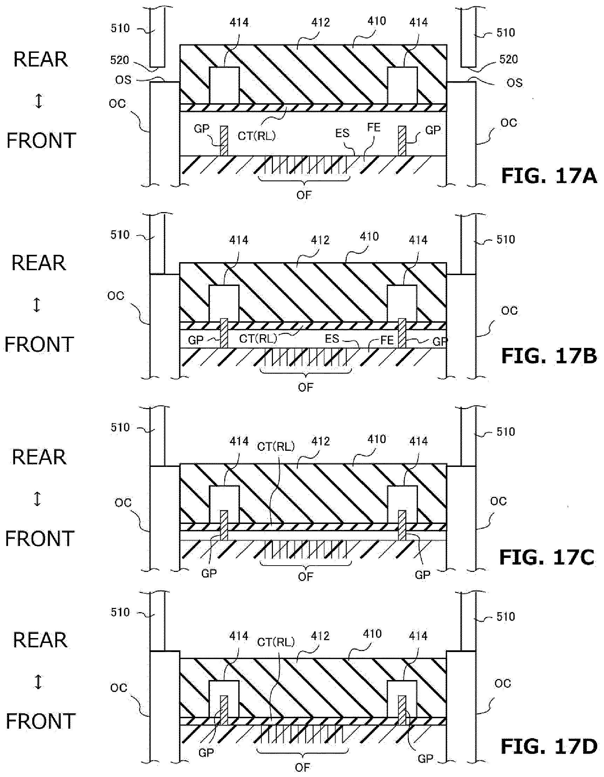

The contact portion 412 has two accommodation holes 414 that accommodates the two guide pins GP projecting from the end face ES of the ferrule FE of the optical connector OC. Since the accommodation holes 414 are formed, the contaminant collector RL of the cleaning body CT can reach the root of the guide pins GP on the end face ES of the ferrule FE of the optical connector OC, and dust near the root of the guide pins GP can be accurately removed. The removal of the dust attaching to the vicinity of the root of the guide pins GP will be described later in detail (see Figs. 16 and 17 to be described later).

The cleaning head 410 has a long, thin, and flat rectangular parallelepiped shape. The cleaning head 410 is held at a constant position of a front end 426 of the head holder 420 described later. The cleaning body CT fed from the supply reel is guided to the contact portion 412 and positioned at the contact portion 412. The cleaning head 410 can be detachably provided on the head holder 420. According to the end face ES of the ferrule FE of the optical connector OC, the head can be appropriately replaced with the corresponding cleaning head 410.

The contaminant collector RL of the cleaning body CT positioned at the contact portion 412 faces the end face ES of the ferrule FE of the optical connector OC, and the contaminant collector RL is brought into contact with the end face ES of the ferrule FE of the optical connector OC, whereby the dust present on the end face ES of the ferrule FE of the optical connector OC is transferred and attached to the contaminant collector RL. When the dust is transferred and attached, the dust on the end face ES of the ferrule FE of the optical connector OC can be removed. Thereafter, the cleaning body CT is wound from the contact portion 412 toward the winding reel 300. The displacement of the cleaning body CT will be described later in detail.

### «Head holder 420»

The head holder 420 has an elongated and constant shape. Specifically, the head holder 420 has an elongated rectangular cylindrical shape and has a hollow structure. The head holder 420 movably accommodates the cleaning body CT from the supply reel 200 to the winding reel 300. Specifically, the head holder 420 movably accommodates the cleaning body CT which is fed from the supply reel 200, passes through the contact portion 412 of the cleaning head 410 described above, and is wound around the winding reel 300.

One or more window portions 425 may be provided on a flat face portion, of the head holder 420, facing the cleaning face of the cleaning body CT. The cleaning body CT may be charged with static electricity due to friction when moving inside the cleaning device. By providing the window portion 425, when the cleaning body CT is charged with static electricity, it is possible to prevent the cleaning body CT from attaching to the inner wall portion of the head holder 420, and the cleaning body CT can be moved in the cleaning device.

Similarly, by using an antistatic material or a material subjected to antistatic processing as the material of the head holder 420 or the material of the inner wall portion, the cleaning body CT can be prevented from attaching to the inner wall portion of the head holder 420, and the cleaning body CT can be moved in the cleaning device.

### <Holding hole 422>

The head holder 420 has a holding hole 422 at a side face of the front portion. A pin 416 formed on the cleaning head 410 is inserted into the holding hole 422. In this manner, the cleaning head 410 can be held at a constant position of the head holder 420.

### <Locking Holes 424RF and 424RR and Locking Holes 424LF and 424LR>

The head holder 420 has two locking holes 424RF and 424RR at a right side face of the rear portion. The locking hole 424RF is formed on the front side, and the locking hole 424RR is formed on the rear side. The front locking hole 424RF is engaged with the stopper 114RF of the right housing 110R, and the rear locking hole 424RR is engaged with the stopper 114RR of the right housing 110R.

The head holder 420 has two locking holes 424LF and 424LR at a left side face of the rear portion. The locking hole 424LF is formed on the front side, and the locking hole 424LR is formed on the rear side. The front locking hole 424LF is engaged with the stopper 114LF of the left housing 110L, and the rear locking hole 424LR is engaged with the stopper 114LR of the left housing 110L.

The head 400 is locked to the housing 100 by the locking holes 424RF and 424RR and the locking holes 424LF and 424LR, whereby the head 400 can be held at a constant position of the housing 100.

### «Position of cleaning head 410»

The cleaning head 410 is held at a constant position of the head holder 420 having a constant shape and locked at a constant position with respect to the housing 100. Therefore, the cleaning head 410 is constantly located at a constant position with respect to the housing 100. That is, the cleaning head 410 does not move with respect to the housing 100 before, during, and after the cleaning operation, and is constantly held at a constant position with respect to the housing 100 and the head holder 420. Since the cleaning head 410 is held at a constant position with respect to the housing 100 and the head holder 420, the cleaning body CT supplied to the contact portion 412 of the cleaning head 410 can be pressed against the end face ES of the ferrule FE of the optical connector OC with a constant force, and the dust on the end face ES can be stably removed without depending on the skill of the operator.

The front end of the cleaning head 410 projects from the head holder 420, and the contact portion 412 of the cleaning head 410 is disposed at a position projecting from the head holder 420. In this way, the cleaning body CT is exposed toward the outside, and the cleaning body CT supplied to the contact portion 412 can be accurately brought into contact with the end face ES of the ferrule FE of the optical connector OC.

In addition, since only the front end of the cleaning head 410 projects from the head holder 420, it is possible to make the contaminant collector RL of the cleaning body CT less likely to be contaminated. The cap 160 described above can be attached to the cleaning head 410, and the contaminant collector RL of the cleaning body CT can be prevented from being contaminated when the cleaning device 10 is not used, and a clean state can be maintained.

### «Internal configuration of head holder 420»

Only the cleaning head 410 and the cleaning body CT are disposed inside the head holder 420. That is, inside the head holder 420, there are only the cleaning body CT (supply cleaning body CT) supplied from the supply reel 200 to the cleaning head 410, the cleaning head 410, and the cleaning body CT (collection cleaning body CT) wound around the winding reel 300 via the cleaning head 410. The contaminant collector RL of the cleaning body CT fed from the supply reel 200 is exposed. Therefore, inside the head holder 420, the supply cleaning body CT and the collection cleaning body CT are moved while being kept linear (planar). In this manner, the contaminant collector RL of the cleaning body CT is prevented from coming into contact with the inner wall of the head holder 420, and contamination of the contaminant collector RL can be prevented.

Further, a movable control main body 510 described below is disposed outside the head holder 420, and the head holder 420 functions as a partition wall. For example, even when dust is generated by sliding (movement) of the control main body 510, the dust can be blocked by the head holder 420 and hardly enter the inside of the head holder 420, and contamination of the contaminant collector RL can be prevented.

Furthermore, the coil spring 140 that drives the control main body 510 is disposed at the rear portion of the housing 100, that is, disposed at a position away from the head holder 420, and can prevent contamination of the contaminant collector RL even when the dust is generated by expansion and contraction of the coil spring 140.

In addition, the coil spring 140 disposed at the rear portion of the housing 100 is housed inside the spring holding portions 124L and 124R, and the spring holding portions 124L and 124R function as partition walls and can prevent the dust due to expansion and contraction of the coil spring 140 from spreading.

### <<<Winding control body 500>>

The winding control body 500 includes the control main body 510, a control end face 520, a winding extension portion 530, and a coil spring pressed portion 540.

### «Control main body 510»

The control main body 510 has an elongated substantially rectangular cylindrical shape and penetrates in the longitudinal direction. That is, the control main body 510 has a hollow structure, and the head 400 (the head holder 420 and the cleaning head 410) described above is housed inside the control main body 510. The control main body 510 can move along the longitudinal direction of the head 400 with respect to the head 400 housed inside. The control main body 510 can move outside the head 400 along the longitudinal direction of the head 400, and the entire winding control body 500 can also move along the longitudinal direction of the head 400 with respect to the head 400 and the housing 100 by the movement of the control main body 510. The motion and operation of the winding control body 500 will be described later.

### <Guiding ridge 512R and Guiding ridge 512L>

The control main body 510 has two guiding ridges 512R at the right side face. The two guiding ridges 512R have an elongated ridge shape. The two guiding ridges 512R are formed in parallel to each other along the longitudinal direction of the control main body 510 at two locations of an upper portion and a lower portion of the right side face of the control main body 510.

The control main body 510 has the two guiding ridges 512L at the left side face. The two guiding ridges 512L have an elongated ridge shape. The two guiding ridges 512R are formed in parallel to each other along the longitudinal direction of the control main body 510 at two locations of an upper portion and a lower portion of the left side face of the control main body 510.

### <Movement control hole 514R and Movement control hole 514L>

The control main body 510 has an elongated movement control hole 514R at a right side face. The movement control hole 514R has a substantially oval through hole shape. The movement control hole 514R is formed between the two elongated guiding ridges 512R along the longitudinal direction of the control main body 510.

The control main body 510 has an elongated movement control hole 514L at a left side face. The movement control hole 514L has a substantially oval through hole shape. The movement control hole 514L is formed between the two elongated guiding ridges 512L along the longitudinal direction of the control main body 510.

The movement control hole 514R and the movement control hole 514L are formed to face each other at the right side face and the left side face of the control main body 510.

### «Control end face 520»

The control end face 520 is an end face formed at the front end of the control main body 510. The control end face 520 faces and contacts a housing end face OS of the optical connector OC, and is formed to be engageable with the housing end face OS. Specifically, when the cleaning device 10 is gripped by the operator and the cleaning device 10 is brought close to the optical connector OC at the time of cleaning the end face ES of the ferrule FE, first, the cleaning device 10 is positioned such that the control end face 520 faces the housing end face OS of the optical connector OC, and the control end face 520 is brought close until contacting (engaging) with the housing end face OS of the optical connector OC.

Further, when the operator applies a force to the cleaning device 10 while maintaining the state in which the control end face 520 of the control main body 510 contacts (engages) with the housing end face OS of the optical connector OC, the control main body 510 is pressed by the housing end face OS and relatively moves in a rearward direction of the housing 100, and the contact portion 412 of the cleaning head 410 approaches the end face ES of the ferrule FE of the optical connector OC. When the control main body 510 relatively moves in a rearward direction of the housing 100, the cleaning body CT is newly fed out from the supply reel 200, and the cleaning body CT supplied to the contact portion 412 of the cleaning head 410 moves.

When the operator further applies a force to the cleaning device 10, the control main body 510 further relatively moves in a rearward direction of the housing 100, and the contact portion 412 of the cleaning head 410 further approaches and contacts the end face ES of the ferrule FE of the optical connector OC. When the control main body 510 further moves in a rearward direction of the housing 100, the cleaning body CT is newly fed out from the supply reel 200, and the clean contaminant collector RL of the cleaning body CT is supplied to the contact portion 412 of the cleaning head 410. Therefore, when the contact portion 412 of the cleaning head 410 comes into contact with the end face ES of the ferrule FE of the optical connector OC, the clean contaminant collector RL of the cleaning body CT comes into contact with the end face ES of the ferrule FE.

In this manner, when the operator applies a force to the cleaning device 10 and pushing the cleaning device 10 into the optical connector OC, the cleaning body CT can be fed from the supply reel 200 while the contact portion 412 of the cleaning head 410 is brought close to the end face ES of the ferrule FE of the optical connector OC, and the clean contaminant collector RL of the cleaning body CT can be constantly brought into contact with the end face ES of the ferrule FE. Specific operations of the cleaning head 410, the control main body 510, and the cleaning body CT will be described later with reference to Figs. 13 to 17.

When the operator applies a force to the cleaning device 10, the control main body 510 moves relative to the housing 100 and the head 400, but the contact portion 412 of the cleaning head 410 is engaged with the end face ES of the ferrule FE of the optical connector OC, and the winding control body 500 and the control main body 510 are stationary with respect to the optical connector OC. In practice, the housing 100 and the head 400 move toward the optical connector OC.

### «Winding extension portion 530»

The winding extension portion 530 is provided to extend from the control main body 510 toward the winding reel 300. The winding extension portion 530 includes a curved portion 532 and a rack forming portion 534.

### <Curved portion 532> (Biasing force generating portion)

The curved portion 532 has a shape curved by approximately 90 degrees. The curved portion 532 projects substantially perpendicularly to the longitudinal direction of the head 400, is curved by substantially 90 degrees, and extends toward the winding reel 300 in substantially parallel to the longitudinal direction of the head 400. The curved portion 532 is formed of an elastically deformable material, and can be elastically deformed as appropriate.

### <Rack forming portion 534>

The rack forming portion 534 is connected to the curved portion 532 and has a substantially linear elongated shape. The rack forming portion 534 has a rack (a row of teeth having tooth tips disposed in a planar manner) 536 along the longitudinal direction of the head 400. The rack 536 is engaged with the ratchet gear 322 of the winding reel 300.

When the control main body 510 moves in the front-rear direction, the rack forming portion 534 can also move in the front-rear direction. The winding reel 300 can be rotated by the movement of the rack forming portion 534 in the front-rear direction. The motion of the control main body 510 and the winding reel 300 will be described later in detail.

### <Coil spring pressed portion 540>

The winding control body 500 has the coil spring pressed portion 540 at a rear end. The moving end 144 of the coil spring 140 is engaged with the coil spring pressed portion 540. The side portion of the coil spring 140 is supported by the spring holding portion 124L and the spring holding portion 124R, and the coil spring 140 is stretchably held between the coil spring pressed portion 540 and the spring locking portion 126 of the left housing 110L.

### ««Motion of cleaning device 10 (Operation of cleaning device 10) »»

Hereinafter, the motion of the cleaning device 10 will be described. As described above, the operator can move the winding control body 500 with respect to the housing 100 and the head 400 by pushing the cleaning device 10 into the optical connector OC. Hereinafter, first, the motion of only the winding control body 500 will be described, and next, the motion of the winding control body 500 and the winding reel 300 will be described.

### <<<Motion of winding control body 500 (operation of control main body 510) >>>

As described above, the control main body 510 has a hollow structure, and the head 400 (the head holder 420 and the cleaning head 410) described above is housed inside the control main body 510. The control main body 510 can move outside the head 400 with respect to the head 400 housed inside. Specifically, when the operator pushes the cleaning device 10 into the optical connector OC, the control main body 510 is engaged with the housing end face OS of the optical connector OC, and the control main body 510 can be moved along the longitudinal direction (that is, the front-rear direction of the cleaning body CT) of the head 400.

### <Maximum front position MF of winding control body 500>

Fig. 13(a) illustrates a state where the control main body 510 is located frontmost. When the movement control hole 514R is engaged with the stopper 114RF and the movement control hole 514L is engaged with the stopper 114LF, the control main body 510 is locked by the stopper 114RF and the stopper 114LF, and the control main body 510 is located frontmost (maximum front position MF). When the operator does not apply a force to the control main body 510, the control main body 510 moves frontward and is positioned at the maximum front position MF by the biasing force of the coil spring 140. The maximum front position MF is the home position of the control main body 510.

### <Intermediate position of winding control body 500>

Fig. 13(b) illustrates a state in which the control main body 510 is moved slightly rearward from the maximum front position MF. As described above, when the operator applies a force to the cleaning device 10 while maintaining the state in which the control end face 520 of the control main body 510 contacts (engages) with the housing end face OS of the optical connector OC, the control main body 510 is pressed by the housing end face OS and moves from the maximum front position MF in a rearward direction of the housing 100. When the control main body 510 moves rearward, part of the control main body 510 is housed in the housing 100 and part of the head holder 420 is exposed from the control main body 510, and the contact portion 412 of the cleaning head 410 approaches the end face ES of the ferrule FE of the optical connector OC.

### <Contact with ferrule FE>

When the operator further increases the force of pushing the cleaning device 10 into the optical connector OC, and the control main body 510 further moves rearward, part of the head holder 420 is further exposed from the control main body 510, and the contact portion 412 contacts the end face ES of the ferrule FE of the optical connector

### OC.

### <Maximum rear position MR of winding control body 500>

In Fig. 14, when the movement control hole 514R is engaged with the stopper 114RR and the movement control hole 514L is engaged with the stopper 114LR, the control main body 510 is locked by the stopper 114RR and the stopper 114LR, and the control main body 510 is located rearmost (maximum rear position MR). In this manner, the control main body 510 can be stopped at the maximum rear position MR. By stopping the control main body 510 at the maximum rear position MR, it is possible to prevent the ferrule FE from being damaged even when the operator tries to strongly press the ferrule FE of the optical connector OC by increasing the force of pushing the cleaning device 10 into the optical connector OC.

As described above, the coil spring 140 is provided at the rear portion of the control main body 510, and the coil spring 140 applies a biasing force to the control main body 510. When the operator weakens the force applied to the control main body 510, the control main body 510 can move to the maximum front position MF and return to the home position by the biasing force of the coil spring 140. In this manner, the winding control body 500 can move between the maximum front position MF and the maximum rear position MR

### «Motions of winding control body 500 and winding reel 300»

As described above, the winding control body 500 can move in the rearward direction or in the frontward direction of the cleaning device 10 by the movement of the control main body 510. Here, the motion of the winding control body 500 and the motion of the winding reel 300 will be described.

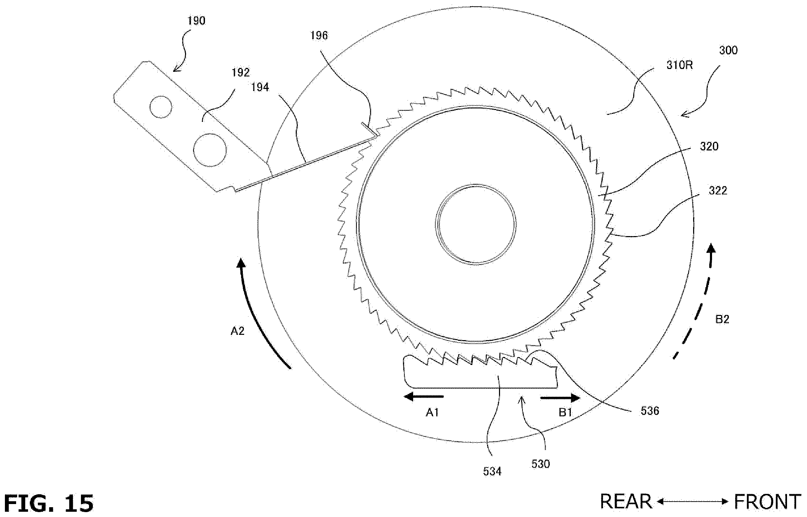

As described above, the control main body 510 includes the winding extension portion 530, and the winding extension portion 530 has a rack 536. The rack 536 is engaged with the ratchet gear 322 of the winding reel 300. The winding reel pawl 190 includes the leaf spring 194, and the leaf spring 194 has an engagement end 196. The engagement end 196 is also engaged with the ratchet gear 322 of the winding reel 300. That is, two members of the rack 536 of the control main body 510 and the engagement end 196 of the winding reel pawl 190 are engaged with the ratchet gear 322 of the winding reel 300, and the motion of the winding reel 300 can be controlled by the engagement state of the two members. Fig. 15 is a schematic diagram illustrating a state of an engagement between the rack 536 and the ratchet gear 322 and an engagement between the engagement end 196 and the ratchet gear 322. Although the rack 536 is covered by the winding extension portion 530 (see Figs. 13 and 14, and the like), Fig. 15 clearly illustrates the rack 536 for the sake of description.

### «When a force is applied to control main body 510»

### <Engagement between ratchet gear 322 and rack 536>

When a force by which the control main body 510 moves rearward (see arrow A1 in Fig. 13(b) and Fig. 15) is applied, the large inclined tooth face of the ratchet gear 322 of the winding reel 300 and the large inclined tooth face of the rack 536 of the winding extension portion 530 face each other and engage with each other. With this engagement, a force capable of rotating the winding reel 300 is transmitted from the rack 536 of the winding extension portion 530 to the ratchet gear 322 of the winding reel 300. In Figs. 13(b) and 15, a force by which the winding reel 300 can rotate clockwise (see arrow A2) is transmitted. A rack-and-pinion mechanism is configured by the rack 536 of the winding extension portion 530 and the ratchet gear 322 of the winding reel 300, and converts linear motion into rotational motion to transmit the motion.

### <Disengagement between ratchet gear 322 and engagement end 196>

When a force (force to rotate clockwise in Figs. 13(b) and 15 (see arrow A2)) is transmitted to the ratchet gear 322 of the winding reel 300, the winding reel 300 moves in a direction in which the large inclined tooth face of the ratchet gear 322 of the winding reel 300 and the large inclined tooth face of the engagement end 196 of the leaf spring 194 are away from each other. Therefore, the large inclined tooth face of the ratchet gear 322 of the winding reel 300 and the large inclined tooth face of the engagement end 196 of the leaf spring 194 do not engage with each other, and the rotational motion of the winding reel 300 is not prohibited. Therefore, when the operator applies a force to the control main body 510 to move the winding control body 500 rearward (see the arrow A1 in Figs. 13(b) and 15), the winding reel 300 can be rotated clockwise (see the arrow A2 in Figs. 13(b) and 15).

When the winding reel 300 rotates (rotates clockwise in Figs. 13(b) and 15), the small inclined tooth face of the engagement end 196 of the leaf spring 194 and the small inclined tooth face of the ratchet gear 322 of the winding reel 300 come into contact with each other. Further, as the winding reel 300 rotates, the leaf spring 194 is pressed by the teeth of the ratchet gear 322 while sliding on the teeth of the ratchet gear 322, and gradually elastically deformed. When the engagement end 196 of the leaf spring 194 passes through the tooth tip of the ratchet gear 322, the leaf spring 194 is released from the elastic deformation and returns to the original shape.

### <Tow and Supply of cleaning body CT>

As described above, when a force is applied to the control main body 510 and the winding control body 500 moves rearward, the force is transmitted to the winding reel 300 by the movement of the control main body 510, and the winding reel 300 can be rotated. When the winding reel 300 rotates, the cleaning body CT is towed (see an arrow A3 in Fig. 13(b)) and wound around the winding reel 300. When the cleaning body CT is towed, the cleaning body CT is newly fed from the supply reel 200 (see an arrow A4 in Fig. 13(b)), and the clean contaminant collector RL of the cleaning body CT is supplied to the contact portion 412 of the cleaning head 410 (see an arrow A5 in Fig. 13(b)). When a force is applied to the control main body 510 and the winding control body 500 moves rearward, the winding control body 500 can be moved to the maximum rear position MR (state of Fig. 14).

### «When a force on control main body 510 is weakened»

### <Engagement between ratchet gear 322 and rack 536>

Next, when a force on the control main body 510 is weakened after moving the winding control body 500 rearward, the winding control body 500 attempts to move frontward by the biasing force of the coil spring 140 as described above (see the arrow B1 in Figs. 15 and 13(b)). That is, the winding control body 500 attempts to move in a direction in which the large inclined tooth face of the ratchet gear 322 of the winding reel 300 and the large inclined tooth face of the rack 536 of the winding extension portion 530 are away from each other. Therefore, the large inclined tooth face of the ratchet gear 322 of the winding reel 300 and the large inclined tooth face of the rack 536 of the winding extension portion 530 do not engage with each other, and the frontward movement of the winding control body 500 is not prohibited.

When the winding control body 500 moves frontward, the small inclined tooth face of the rack 536 of the winding extension portion 530 comes into contact with the small inclined tooth face of the ratchet gear 322 of the winding reel 300. Furthermore, as the winding control body 500 moves, the winding extension portion 530 is pressed by the teeth of the ratchet gear 322 while sliding on the teeth of the ratchet gear 322, and gradually elastically deformed. When the rack 536 of the winding extension portion 530 passes through the tooth tip of the ratchet gear 322, the elastic deformation is released and returns to the original shape.

### <Engagement between ratchet gear 322 and engagement end 196>

Furthermore, when the winding control body 500 moves frontward, a force capable of rotating the winding reel 300 is applied by the contact between the small inclined tooth face of the rack 536 of the winding extension portion 530 and the small inclined tooth face of the ratchet gear 322 of the winding reel 300. In the drawing of Fig. 15, a force by which the winding reel 300 can rotate counterclockwise is transmitted (see broken line arrow B2 in Fig. 15). When the force to rotate counterclockwise is transmitted to the ratchet gear 322 of the winding reel 300, the large inclined tooth face of the ratchet gear 322 of the winding reel 300 and the large inclined tooth face of the engagement end 196 of the leaf spring 194 face each other and engage with each other. With this engagement, even when the force capable of rotating counterclockwise is transmitted to the winding reel 300, the rotational motion of the winding reel 300 is prohibited, and the winding reel 300 does not rotate counterclockwise. The engagement between the ratchet gear 322 and the engagement end 196 forms a reverse prevention mechanism.

### <Engagement between ratchet gear 222 and engagement end 186>

As described above, the supply reel pawl 180 includes the leaf spring 184, and the leaf spring 184 has the engagement end 186 (see Fig. 6). The supply reel 200 has the ratchet gear 222. The engagement end 186 of the leaf spring 184 engages with the ratchet gear 222 of the supply reel 200. When the force in the direction in which the cleaning body CT returns to the supply reel 200 is applied via the cleaning body CT, the large inclined tooth face of the ratchet gear 222 of the supply reel 200 and the large inclined tooth face of the engagement end 186 of the leaf spring 184 face each other and engage with each other. With this engagement, even when the force in the direction in which the cleaning body CT reverses is transmitted to the supply reel 200, the rotational motion of the supply reel 200 is prohibited. The engagement between the ratchet gear 222 and the engagement end 186 forms a reverse prevention mechanism.

As described above, when the force on the control main body 510 is weakened, the winding control body 500 moves frontward by the biasing force of the coil spring 140 without rotating the winding reel 300 (see the arrow B1 in Figs. 15 and 13(b)). Therefore, the winding control body 500 can be returned to the home position while maintaining the wound state without releasing the cleaning body CT wound around the winding reel 300 (state of Fig. 13(a)). By prohibiting the rotational motion of the winding reel 300 when the winding control body 500 is returned to the home position, it is possible to prevent the cleaning body CT contaminated with dust from returning to the cleaning head 410.

### <Feed length FL of cleaning body CT>

The winding control body 500 is positioned at the maximum front position MF by the stopper 114RF and the stopper 114LF, and is positioned at the maximum rear position MR by the stopper 114RR and the stopper 114LR. Therefore, the winding control body 500 can constantly be moved by a constant length (see Fig. 13(a) and FL of Fig. 14), the feed length of the cleaning body CT can also be made constant, and the clean contaminant collector RL can constantly be supplied to the contact portion 412 of the cleaning head 410 without depending on the skill or ability of the operator.

### <<<Path of cleaning body CT>>>

In the supply reel 200, the cleaning body CT is wound, and the contaminant collector RL of the cleaning body CT is covered with the adjacent cleaning body CT. Therefore, the contaminant collector RL of the cleaning body CT is not contaminated.

The supply reel 200 is held by the housing 100, and the cleaning body CT fed from the supply reel 200 is housed in the housing 100 and the head holder 420 until reaching the cleaning head 410, so that the contaminant collector RL of the cleaning body CT can be kept clean.

When the cleaning body CT is fed out from the supply reel 200, the winding is released, and the contaminant collector RL of the cleaning body CT is exposed. After being fed out from the reel 200, the contaminant collector RL of the cleaning body CT preferably travels straight without contacting any member and reaches the cleaning head 410. The path of the cleaning body CT can be appropriately changed by a roller, a guide, or the like using the face opposite to the contaminant collector RL. Even when the contaminant collector RL of the cleaning body CT comes into contact with a member, the contaminant collector RL of the cleaning body CT can be kept clean by using the clean member.

### ««Flow of cleaning work»»

First, the operator brings the control end face 520 close to the housing end face OS of the optical connector OC until the control end face 520 comes into contact with (engages with) the housing end face OS. Next, when the operator applies a force to the cleaning device 10 while maintaining the state in which the control end face 520 of the control main body 510 contacts (engages with) the housing end face OS of the optical connector OC, the control main body 510 is pressed by the housing end face OS and relatively moves in a rearward direction of the housing 100, and the contact portion 412 of the cleaning head 410 approaches the end face ES of the ferrule FE of the optical connector OC.

When the control main body 510 relatively moves in a rearward direction of the housing 100 (arrow A1 in Fig. 13(b)), the winding reel 300 rotates in the winding direction at a rotation angle corresponding to the movement of the control main body 510 (arrow A2 in Fig. 13(b)). The cleaning body CT is towed by the rotation of the winding reel 300 (arrow A3 in Fig. 13(b)) and wound around the winding reel 300.

When the cleaning body CT is towed by the winding reel 300 (arrow A3 in Fig. 13(b)), the cleaning body CT is fed from the supply reel 200 (arrow A4 in Fig. 13(b)), and the clean contaminant collector RL of the cleaning body CT is supplied to the contact portion 412 of the cleaning head 410 (arrow A5 in Fig. 13(b)).

Thereafter, the operator strengthens the force on the cleaning device 10 to bring the contact portion 412 of the cleaning head 410 close to the end face ES of the ferrule FE of the optical connector OC, and presses the contaminant collector RL of the cleaning body CT against the end face ES of the ferrule FE of the optical connector OC, so that the dust on the end face ES of the ferrule FE of the optical connector OC can be transferred and attached to the contaminant collector RL to clean the end face ES of the ferrule FE of the optical connector OC.

With such a configuration, the cleaning body CT is continuously towed along with the relative movement of the control main body 510. That is, until the contact portion 412 of the cleaning head 410 reaches the end face ES of the ferrule FE of the optical connector OC, the control main body 510 continues to move and the cleaning body CT is towed. Therefore, until the contaminant collector RL of the cleaning body CT is pressed against the end face ES of the ferrule FE of the optical connector OC, the cleaning body CT positioned in the contact portion 412 of the cleaning head 410 moves to a position away from the contact portion 412, and the clean contaminant collector RL of the cleaning body CT is newly supplied and positioned to the contact portion 412. That is, the clean contaminant collector RL of the cleaning body CT can be newly supplied to the contact portion 412 before the contaminant collector RL of the cleaning body CT comes into contact with the end face ES of the ferrule FE of the optical connector OC.

After the cleaning is finished, the operator weakens the force on the cleaning device 10, so that the control main body 510 is relatively moved frontward by the biasing force of the coil spring 140 to return to the home position.

When the control main body 510 moves frontward, the ratchet gear 322 is locked by the engagement end 196, and the rotation of the winding reel 300 is prohibited, so that the cleaning body CT does not move, and the contaminant collector RL of the cleaning body CT supplied to the contact portion 412 of the cleaning head 410 is maintained at the position of the contact portion 412.

### <<<<Process of cleaning by cleaning device 10>>>

Figs. 16(a) to 16 (d) are cross-sectional views illustrating a process of cleaning the end face ES of the ferrule FE of the optical connector OC using the cleaning device 10. For example, it can be used for cleaning an MPO connector or the like. Figs. 16(a) to 16 (d) illustrate a relative positional relationship between the ferrule FE and the cleaning body CT in the cleaning process. In the example illustrated in Figs. 16(a) to 16 (d), the ferrule FE has ends of 12 optical fibers OF side by side. The ferrule FE has two guide pins GP projecting perpendicularly (in a direction away from the end face ES) from the end face ES of the ferrule FE with the 12 optical fibers OF therebetween.

First, an operator grips the cleaning device 10, and brings the cleaning head 410 of the cleaning device 10 close to an opening portion OP of the optical connector OC so as to face the opening portion OP as illustrated in Fig. 2. Next, the housing end face OS of the optical connector OC is engaged with the control end face 520 of the control main body 510 to apply a force to the cleaning device 10. By applying the force, the cleaning head 410 can be inserted into the opening portion OP of the optical connector OC while the control main body 510 is housed in the housing 100, and the contact portion 412 of the head 400 can be brought close to the end face ES of the ferrule FE of the optical connector OC. Further, by increasing the force on the cleaning device 10, the contaminant collector RL of the cleaning body CT can be brought into close contact with the end face ES of the ferrule FE. A specific process will be described below.

First, as illustrated in Fig. 16A, when the operator inserts the cleaning head 410 into the opening portion OP of the optical connector OC, the contaminant collector RL of the cleaning body CT faces the end face ES of the ferrule FE at a position away from the end face ES.

Further, when the operator applies a force to the cleaning device 10 toward the optical connector OC, as illustrated in Fig. 16B, the control end face 520 of the control main body 510 is engaged with the housing end face OS of the optical connector OC, and the contaminant collector RL of the cleaning body CT of the contact portion 412 of the head 400 approaches the end face ES of the ferrule FE of the optical connector OC. In the state illustrated in Fig. 16B, the contaminant collector RL of the cleaning body CT comes into contact with the tip portions of the two guide pins GP of the ferrule FE, and is pressed by the two guide pins GP to be elastically deformed.

Next, when the operator further applies a force, as shown in Fig. 16C, the contaminant collector RL of the cleaning body CT further approaches the end face ES of the ferrule FE of the optical connector OC. At this time, the contaminant collector RL is pressed by the two guide pins GP, and starts to cover the two guide pins GP by the biasing force (restoring force) generated in the contaminant collector RL.

Next, when the operator further applies a force to the cleaning device 10, the contaminant collector RL reaches the end face ES of the ferrule FE as illustrated in Fig. 16D. At this time, the portion elastically deformed by the contact with the two guide pins GP covers the two guide pins GP by the biasing force (restoring force) generated in the contaminant collector RL up to their roots by the contaminant collector RL. By covering the two guide pins GP up to their roots with the contaminant collector RL, the contaminant collector RL can be brought into close contact with the entire end face ES of the ferrule FE without forming a gap between the contaminant collector RL and the end face ES of the ferrule FE. By attaching the contaminant collector RL to the roots of the two guide pins GP, the entire dust on the end face ES of the ferrule FE can be transferred and attached by the adhesive force of the contaminant collector RL, where the dust attaches to the end face ES of the ferrule FE by electrostatic force or the like. The dust attached to the peripheries of the roots of the two guide pins GP and the two guide pins GP can be transferred and attached, and removed by the adhesive force of the contaminant collector RL. By appropriately selecting the elastic modulus, hardness, and the like of the contaminant collector RL, the entire two guide pins GP can be covered with the contaminant collector RL using the biasing force (restoring force) of the contaminant collector RL.

The cleaning head 410 has accommodation holes 414 that accommodate two guide pins GP, and even when the contaminant collector RL reaches the end face ES of the ferrule FE, the contaminant collector RL is accommodated in the accommodation holes 414 together with the entire guide pins GP. Since the accommodation holes 414 are provided, it is possible to accurately remove dust even from the ferrule FE having the guide pins GP. Since the contaminant collector RL can also be accommodated in the accommodation hole 414, deformation of the contaminant collector RL due to the biasing force (restoring force) is not hindered, and the entire guide pins GP can be covered with the contaminant collector RL.

Figs. 16A to 16D described above illustrate an example in which the contaminant collector RL is elastically deformed according to the shape and size of the two guide pins GP without being punctured with the two guide pins GP, and the contaminant collector RL covers the two guide pins GP up to their roots by the biasing force (restoring force) generated in the contaminant collector RL. However, the contaminant collector RL may be plastically deformed by puncturing the contaminant collector RL with the two guide pins GP. Figs. 17A to 17D are diagrams illustrating an example of a case where the contaminant collector RL is plastically deformed. Whether the contaminant collector RL is elastically deformed or plastically deformed may be determined by appropriately determining a Shore A hardness or the like of the contaminant collector RL.

Fig. 17A illustrates the same state as Fig. 16A. As illustrated in Fig. 17B, when the two guide pins GP come into contact with and are pressed against the cleaning body CT (contaminant collector RL), the contaminant collector RL is punctured with the two guide pins GP and plastically deformed, and piercing starts from the beginning of contact with the two guide pins GP. Next, when the cleaning body CT is pushed in, as illustrated in Fig. 17C, plastic deformation further proceeds, and the two guide pins GP gradually pierce the contaminant collector RL. Finally, as illustrated in Fig. 17D, the cleaning body CT reaches the end face ES of the ferrule FE while the contaminant collector RL is plastically deformed. As described above, even when the contaminant collector RL is plastically deformed, the contaminant collector RL of the cleaning body CT can attach to the roots of the two guide pins GP. Also in this case, the dust attached to the peripheries of the roots of the two guide pins GP and the two guide pins GP can be transferred and attached, and removed by the adhesive force of the contaminant collector RL.

### ««Modification 1»»

Although there is no release film in the cleaning body CT in the above-described embodiment, a release film may be provided in the cleaning body CT. The release film is a film that covers the contaminant collector RL, and by providing the release film, the tackiness of the contaminant collector RL can be maintained or contamination can be prevented.

When the release film is provided on the cleaning body CT, the cleaning body CT can be wound around the supply reel 200 together with the release film, and when the cleaning body CT is fed out from the supply reel 200, the cleaning body CT can be supplied to the cleaning head 410 after the release film is peeled off.

In releasing the release film, the release film can be easily peeled off by reducing the radius of curvature to curve the cleaning body CT and increasing the bending degree of the cleaning body CT. In addition, it is preferable to provide a release film storage reel that stores the released release film. The reel makes it possible to prevent the released release film from coming into contact with the contaminant collector RL again and hindering smooth movement of the cleaning body CT. Further, it is also possible to prevent the adhesion of the contaminant collector RL from being lowered and the cleanliness from being lowered by the contact of the released release film.

A discharge hole may be provided without storing the released release film, and the release film may be released and discharged from the housing 100. It is not necessary to secure a space for providing the release film storage reel, and the entire cleaning device 10 can be downsized by reducing the size of the housing 100. Further, a cutter for cutting the discharged release film may be provided in the discharge hole.

### ««Modification 2»»

In the cleaning device 10 of the above-described embodiment, an example is described in which the cleaning body CT to which dust is transferred and attached by being pressed against the end face ES of the optical connector OC is collected by the winding reel 300. However, a discharge hole may be provided to discharge the cleaning body CT contaminated with dust from the housing 100. It is not necessary to secure a space for providing the winding reel 300, and the entire cleaning device 10 can be downsized by reducing the size of the housing 100. Further, a cutter for cutting the discharged cleaning body CT may be provided in the discharge hole.

### ««Modification 3»»

In the cleaning body CT of the above-described embodiment, an example in which there is no substrate is described, but a substrate may be provided in the cleaning body CT. The substrate is, for example, a film for supporting the contaminant collector RL, and by providing the substrate, it is possible to prevent the contaminant collector RL from being deformed or damaged before use. In addition, it is possible to prevent the cleaning body CT from adhering to each other when the cleaning body CT is wound.

When the substrate is provided on the cleaning body CT, the cleaning body CT can be wound around the supply reel 200 together with the substrate, and when they are fed out from the supply reel 200, the cleaning body CT and the substrate can be integrally supplied to the cleaning head 410.

The substrate can be provided on the surface of the cleaning CT toward the cleaning head when the cleaning CT is supplied to the cleaning head 410. The used substrate is collected on the winding reel integrally with the cleaning CT.

### ««Modification 4»»

In the cleaning device 10 of the above-described embodiment, the example in which the winding reel 300 is disposed at the front of the housing 100 and the supply reel 200 is disposed at the rear of the housing 100 is described, but the supply reel 200 may be disposed at the front and the winding reel 300 may be disposed at the rear. The distance from when the contaminant collector RL is exposed to when it reaches the contact portion 412 of the cleaning head 410 can be shortened, the possibility that the contaminant collector RL is contaminated can be reduced, and the adhesion can be maintained to accurately transfer and attach the dust.

««Modification 5»»

In the cleaning device 10 of the above-described embodiment, an example in which the supply reel 200 and the winding reel 300 are disposed so as to be away from each other and rotatable about different rotation shafts is described, but the supply reel 200 and the winding reel 300 may be disposed so as to be rotatable coaxially. The size can be reduced in the front-rear direction.

### <<<<Modification 6>>>>

In the cleaning device 10 of the above-described embodiment, an example is described in which the housing 100 and the head 400 are prepared separately and joined to obtain the cleaning device 10, but the housing 100 and the head 400 may be formed integrally in advance.

### <<<<Modification 7>>>>

In the cleaning device 10 of the above-described embodiment, an example in which only the winding reel 300 is rotated by the movement of the control main body 510 is described, but the motion of the control main body 510 may be transmitted to the ratchet gear 222 of the supply reel 200 to rotate the supply reel 200 together with the winding reel 300. It is not necessary to rotate the supply reel 200 by towing the cleaning body CT, it is not necessary to apply a towing force to the cleaning body CT, and it is possible to prevent the cleaning body CT from being stretched or damaged by the towing force.

### <<<<Modification 8>>>>

In the cleaning device 10 of the above-described embodiment, the accommodation holes 414 that accommodate the two guide pins GP are provided, but the accommodation holes 414 may not be provided. The contact portion 412 can have a flat shape without the accommodation holes 414, and in the case of the ferrule FE in which no guide pin GP exists, the contaminant collector RL can be pressed against the entire face of the end face ES of the ferrule FE with a uniform pressing force.

### <<<<Modification 9>>>>

In the cleaning device 10 of the above-described embodiment, an example of applying the biasing force to the winding control body 500 and the control main body 510 using the coil spring 140 is described. However, instead of the coil spring, various springs such as a leaf spring, an elastic body formed of resin such as rubber, and the like can be used as long as the biasing force is generated.

### ««Modification 10»»

In the cleaning device 10 of the above-described embodiment, an example in which the supply path and the collection path of the cleaning body CT are parallel to each other inside the head holder 420 is described, but the supply path and the collection path may not be parallel to each other.

### <<<Second embodiment>>>

The cleaning device of the second embodiment is a cleaning device of another aspect different from the first embodiment for cleaning the end face from which the guide pins GP protrude. Examples of the object to be cleaned include an optical connector having an end face from which guide pins GP (pin) protrude (MT connector (F12 type multi core optical fiber connector: JIS C 5981), MPO connector (F13 type multi core optical fiber connector: JIS C 5982), MTRJ connector, MPX connector, and the like), and a plug in which 2 to 3 guide pins GP for insertion into a socket of an outlet protrude.

The cleaning device of the second embodiment includes a contaminant collector that can be punctured with the guide pins GP, and a support body that supports the contaminant collector such that part of the surface of the contaminant collector is exposed (not in contact with the support body). In addition, the thickness of the contaminant collector in a direction normal to the exposed surface portion of the contaminant collector may be larger than the length from the surface of the connection end face to the pin tip portion. As will be described in detail later, in the cleaning device of the embodiment, the surface of the exposed contaminant collector is punctured with the guide pins GP protruding from the end face to be cleaned, and the end face is pressed against the surface of the contaminant collector, so that the end face from which the guide pins GP protrude including the peripheral face of the pin can be cleaned in a simple and short time.

Hereinafter, the cleaning device of the second embodiment will be described in detail with reference to an example of an execution mode in a case of cleaning the end face, of the optical connector, from which the guide pins GP protrude.

### «Thirteenth execution mode»

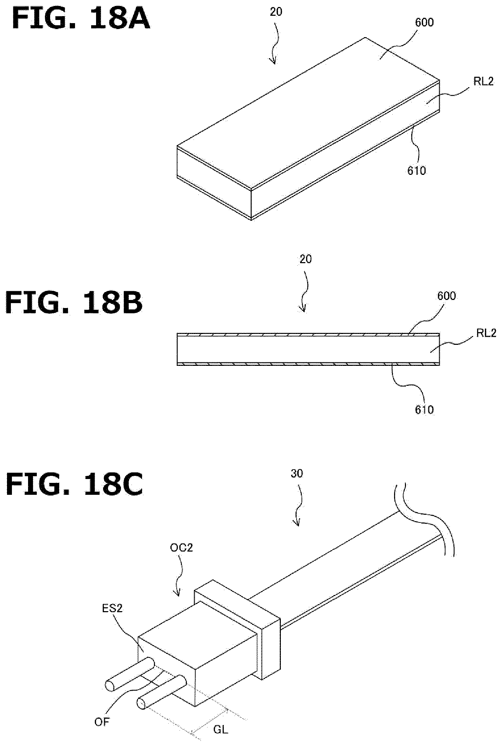

Fig. 18A is a perspective view illustrating a cleaning device of a thirteenth execution mode, Fig. 18B is a longitudinal sectional view illustrating the cleaning device of the thirteenth execution mode, and Fig. 18C is a perspective view illustrating an optical connector which is an object to be cleaned. An optical connector OC2 illustrated in Fig. 18C is an optical connector in which two guide pins GP2 protrude from an end face (connection end face) ES2. A reference sign OF in Fig. 18C denotes an optical fiber.

A cleaning device 20 of the thirteenth execution mode includes a contaminant collector RL2 that can be punctured with the guide pins GP2 and a plate body 610 (support body) that has rigidity and that is laminated on one surface of the contaminant collector RL2 and supports the contaminant collector RL2, and has a rectangular plate shape having a portable size. A cover film (cover) 600 is releasably provided on a surface 601 of the contaminant collector RL2 on the exposed side where the plate body 610 is not provided, and covers the surface 601 of the contaminant collector RL2. The cover film 600 is released when the optical connector OC2 is cleaned using the cleaning device 20.

As illustrated in Figs. 18A to 18C, the contaminant collector RL2 included in the cleaning device 20 of the thirteenth execution mode has a thickness (D1) equal to or larger than a length (GL) of the guide pin GP2 included in the optical connector OC2. In this example, the thickness (D1) of the contaminant collector RL2 is about 2.5 to 3.0 mm.

As the cover film 600, a known resin film or the like subjected to release treatment for the contaminant collector RL2 can be used.

In each of the following embodiments, the film or the like exemplified here can be similarly used as the cover film.

The plate body 610 having rigidity is made of, for example, a metal plate, a resin plate (a plate made of polyolefin (polypropylene, polyethylene), amorphous polyester, polyvinyl chloride, polyvinylidene fluoride, nylon, or the like.), or the like, and is set to a thickness according to a material or the like thereof so as to stably support the contaminant collector RL2. The plate body 610 does not need to be puncturable with the guide pins GP2.

In each of the following embodiments, the plate body or the like exemplified herein can be similarly used as the plate body having rigidity.

When cleaning the end face (connection end face) 21, of the optical connector OC2, from which the guide pins GP2 protrude using the cleaning device 20 of the thirteenth execution mode, first, the operator releases the cover film 600 of the cleaning device 20 to expose the surface 601 of the contaminant collector RL2.

Next, the operator holds the optical connector with one hand and holds the cleaning device 20 with the other hand, and as shown in Fig. 19A, the end face ES2 of the optical connector OC2 is brought close to the surface 601 of the exposed contaminant collector RL2 of the cleaning device 20, the contaminant collector RL2 is punctured with the guide pins GP2, and the end face ES2 is pressed against the surface 601 of the contaminant collector RL2. In this example, since the thickness (D1) of the contaminant collector RL2 is equal to or larger than the length (GL) of the guide pin GP2 of the optical connector OC2, the entire length of the guide pin GP2 is in a state of puncturing the contaminant collector RL2. In this example, a non-through hole is formed by puncturing the contaminant collector RL2 with the guide pin GP2.

Then, as illustrated in Fig. 19B, the end face ES2 of the optical connector OC2 is away from the contaminant collector RL2, and the guide pins GP2 are pulled out of the contaminant collector RL2. When the guide pins GP2 are pulled out of the contaminant collector RL2, the non-penetrating hole returns to the original flat state.

In the above cleaning work, dust, dirt, and the like attaching to the end face ES2 of the optical connector OC2 is attached and transferred to the surface 601 of the contaminant collector RL2 when the end face ES2 is pressed against the surface 601 of the contaminant collector RL2. Dust, dirt, and the like attaching to the peripheral faces of the guide pins GP2 are also attached and transferred to the contaminant collector RL2 while the guide pins GP2 puncture and then be pulled out of the contaminant collector RL2.

As described above, according to the cleaning device 20 of the thirteenth execution mode, it is possible to remove dust, dirt, and the like attaching to the end face ES2 and the peripheral faces of the guide pins GP2 by a simple and short time operation in which the operator presses the end face ES2 of the optical connector OC2 against the contaminant collector RL2 of the cleaning device 20, and punctures the collector with the guide pins GP2, and pulls the pins out of the collector. Therefore, the end face ES2 from which the guide pins GP2 protrude including the peripheral faces of the guide pins GP2 can be cleaned by one operation at a time.

Further, for example, even when the end face of the optical connector is finished by so-called "8° polishing" and the angle between the guide pin GP and the end face is not a right angle, the surface of the end face can be cleaned uniformly and without inconsistencies.

In addition, the cleaning device 20 of the thirteenth execution mode has a simple configuration and is advantageous in terms of cost.

In addition, the cleaning device 20 of the thirteenth execution mode has a size that can be carried by an operator. Therefore, when the operator performs optical connector connection work at a certain place and then moves to another place to perform optical connector connection work, the cleaning device 20 can be easily carried and the cleaning work can be performed at each place.

Fig. 19A illustrates a state in which the cover film 600 is completely released so that the entire surface 601 of the contaminant collector RL2 is exposed. However, the cover film 600 does not need to be released so that the entire surface 601 of the contaminant collector RL2 is exposed, and may be partially released as long as the surface 601 having an area and a shape necessary for cleaning the end face ES2 of the optical connector OC2 is exposed.

For example, as in this example, when the area of the surface 601 of the contaminant collector RL2 is sufficiently larger than the area of the end face ES2 of the optical connector OC2, the cleaning operation may be performed while only part of the surface 601 of the contaminant collector RL2 is exposed. Thereafter, the cover film 600 may be returned to the original state, and the surface 601 of the exposed contaminant collector RL2 may be covered again.

Next, when the end face ES2 of another optical connector OC2 is cleaned, the cover film 600 is partially released again to expose the surface 601 of the contaminant collector RL2, and the cleaning may be performed. At this time, when the amount of dust and dirt attaching to the end face ES2 and the guide pins GP2, of the optical connector OC2, to be cleaned is small and the degree of contamination is small, the end faces ES2 of the plurality of optical connectors OC2 may be cleaned in the same region of the surface 601 of the contaminant collector RL2. When the degree of contamination is large, it is preferable to expose another new surface 601 and clean the end face ES2 each time one optical connector OC2 is cleaned.

As described above, one cleaning device 20 can clean the plurality of optical connectors OC2.

The cover film 600 covering the contaminant collector RL is not limited to one sheet, and may be divided into a plurality of sheets. With such a configuration, it is also possible to release part of the plurality of divided sheets to expose only a partial region of the contaminant collector RL.

Accordingly, when the area of the surface 601 of the contaminant collector RL is sufficiently larger than the area of the end face ES of the optical connector OC2, the surface 601 of the contaminant collector RL can be exposed by an amount necessary for cleaning the end face ES of one optical connector OC2.

In addition, Figs. 19A and 19B illustrate a state in which the end face ES2 of the optical connector OC2 is pressed against the surface 601 of the contaminant collector RL2 in a positional relationship in which the longitudinal direction of the cleaning device 20 and the longitudinal direction of the end face ES2 of the optical connector OC2 are parallel to each other. However, the longitudinal direction of the cleaning device 20 and the short direction of the end face ES2 of the optical connector OC2 may be pressed so as to be parallel to each other, and the positional relationships in the cleaning operation is not particularly limited.

The cleaning device 20 of the thirteenth execution mode can be manufactured by a method in which the contaminant collector RL2 is formed on the plate body 610 having rigidity, and the cover film 600 is provided thereon.

The contaminant collector RL2 may be formed depending on the material of the contaminant collector RL2 and the like. For example, it can be formed by a method in which a monomer component constituting the contaminant collector RL2 is applied onto the plate body 610, and then the monomer component is cured (crosslinked) by performing heating, light irradiation, or the like as necessary. In addition, the contaminant collector may be formed on a separately prepared sheet having transferability, and the contaminant collector may be transferred onto the plate body 610.

### «Fourteenth execution mode»

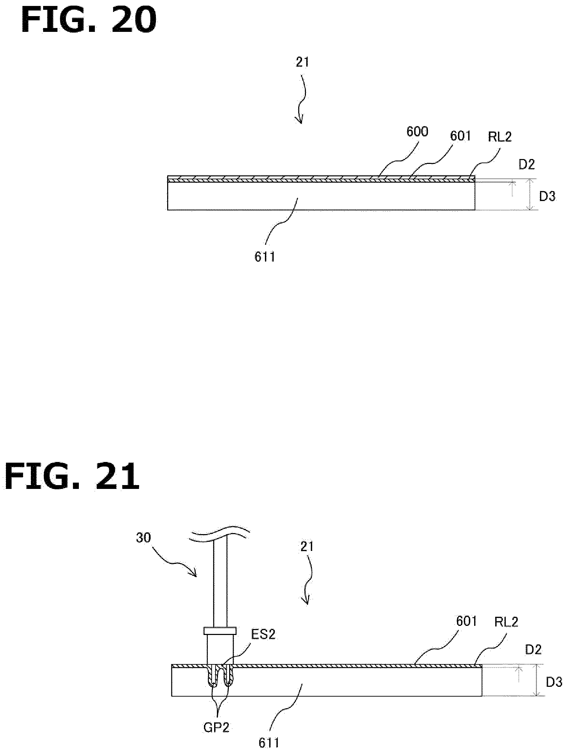

Fig. 20 is a longitudinal sectional view illustrating a cleaning device of a fourteenth execution mode.

A cleaning device 21 of the fourteenth execution mode includes the contaminant collector RL2 that can be punctured with the guide pins GP2 and a plate body 611 (support body) that is laminated on one surface of the contaminant collector RL2 and supports the contaminant collector RL2 and that can be punctured with the guide pins GP2, and has a rectangular plate shape having a portable size. The cover film (cover) 600 is releasably provided on the surface 601 of the contaminant collector RL2 on the exposed side where the plate body 611 is not provided, and covers the surface 601 of the contaminant collector RL2.

As illustrated in Fig. 20, the cleaning device 21 of the fourteenth execution mode is different from the cleaning device 20 of the thirteenth execution mode in that a contaminant collector RL2 has a thickness (D2) smaller than the length (GL) of the guide pin GP2 of the optical connector OC2, and has the plate body 611, as a support body, that can be punctured with the guide pins GP2.

Examples of the plate body 611 that can be punctured with the guide pins GP2 include resins such as polyurethane, ethylene vinyl acetate, polystyrene, polyethylene, silicone resin, polyolefin, and polyester, or foams of these resins, or rubber-based sponges such as neoprene and natural sponge. In this example, the total thickness (D3) of the contaminant collector RL2 and the plate body 611 that can be punctured with the guide pins GP2 is set to be equal to or larger than the length (GL) of the guide pin GP2 of the optical connector OC2.

In each of the following embodiments, the plate body and the like exemplified here can be similarly used as the plate body that can be punctured with a pin such as the guide pin GP.

The case of using the cleaning device 21 of the fourteenth execution mode is similar to the case of the cleaning device 20 of the thirteenth execution mode in that the operator can carry the cleaning device and clean the end face ES2, of the optical connector OC2, from which the guide pins GP2 protrude in a short time by a similar simple procedure and operation.

In the cleaning device 21 of the fourteenth execution mode, the thickness (D2) of the contaminant collector RL2 is smaller than the length (GL) of the guide pin GP2. Therefore, in this example, as illustrated in Fig. 21, when the operator punctures the contaminant collector RL2 with the guide pins GP2 of the optical connector OC2, the portion, of the contaminant collector RL2, in which the guide pins GP2 is pushed is recessed following the shape of the guide pins GP2. However, even in such a case, dust, dirt, and the like attaching to the peripheral faces of the guide pins GP2 are attached and transferred to the contaminant collector RL2 in the process in which the guide pins GP2 recesses the contaminant collector RL2 and is then pulled out. Dust, dirt, and the like attaching to the end face ES2 of the optical connector OC2 are attached and transferred to the contaminant collector RL2 by the end face ES2 being pressed against the surface 601 of the contaminant collector RL2 as in the case of the thirteenth execution mode. Thus, dust, dirt, and the like are removed.

The portion, of the plate body 611, that is punctured with the guide pins GP2 is recessed following the shape of the guide pins GP2, or a through or non-through hole is formed.

In addition, the contaminant collector RL2 after the guide pins GP2 is pulled out restores from the recess and returns to its original shape. On the other hand, the plate body 611 returns to its original shape after restoring from the recess, or a through-hole or a non-through-hole is closed.

The cleaning device 21 of the fourteenth execution mode can reduce the amount of the adhesive that forms the contaminant collector as compared with the cleaning device 20 of the thirteenth execution mode. Therefore, the cost required for forming the contaminant collector can be suppressed.

In addition, the use feeling of the cleaning device 21 can be improved by using the foam for the plate body 611 of the cleaning device 21 of the fourteenth execution mode. That is, when the operator punctures the plate body with the guide pins GP2, the resistance feeling is reduced, and the clarity (piercing response) of the response to the cleaning operation can be obtained.

The cleaning device 21 of the fourteenth execution mode can be manufactured by a method in which the contaminant collector RL2 is formed on the plate body 611 that can be punctured with the guide pins GP2, and the cover film 600 is provided thereon.

As described above, the contaminant collector RL2 may be formed according to the material of the contaminant collector RL2 or the like.

### «Fifteenth execution mode»

As in the cleaning device of the fourteenth execution mode, the cleaning device of a fifteenth execution mode includes the contaminant collector RL2 that can be punctured with the guide pins GP2 and the plate body 611 (support body) that can be punctured with the guide pins GP2 and that is laminated on one surface of the contaminant collector RL2 and supports the contaminant collector RL2, and has a rectangular plate shape having a portable size, as shown in Fig. 20. The cover film (cover) 600 is releasably provided on the surface 601 of the contaminant collector RL2 on the exposed side where the plate body 611 is not provided, and covers the surface 601 of the contaminant collector RL2.

As illustrated in Fig. 20, the cleaning device 21 of the fifteenth execution mode is different from the cleaning device 20 of the thirteenth execution mode in that the contaminant collector RL2 has a thickness (D2) smaller than the length (GL) of the guide pin GP2 of the optical connector OC2, and has the plate body 611, as a support body, that can be punctured with the guide pins GP2.

Examples of the plate body 611 that can be punctured with the guide pins GP2 include foams of resins such as polyurethane, ethylene vinyl acetate, polystyrene, and polyethylene, and rubber-based sponges such as neoprene and natural sponges. In this example, the total thickness (D3) of the contaminant collector RL2 and the plate body 611 that can be punctured with the guide pins GP2 is set to be equal to or larger than the length (GL) of the guide pin GP2 of the optical connector OC2.

In each of the following embodiments, the plate body and the like exemplified here can be similarly used as the plate body that can be punctured with a pin such as the guide pin GP.

### «Fifteenth execution mode»

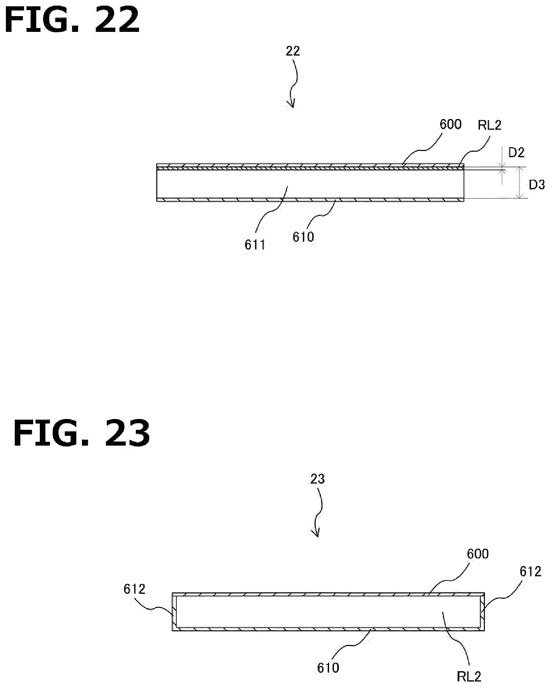

Fig. 22 is a longitudinal sectional view illustrating a cleaning device of the fifteenth execution mode.

In the cleaning device 21 of the above-described fourteenth execution mode, as shown in Fig. 20, the support body is formed only of the plate body 611 provided in contact with the contaminant collector RL2 and capable of being punctured with the guide pins GP2. On the other hand, as illustrated in Fig. 23, the support body of a cleaning device 22 of a sixteenth execution mode is composed of two layers of the plate body 610 having rigidity such as a metal plate and a resin plate and a plate body 611 that is provided in contact with the contaminant collector RL2 and that can be punctured with the guide pins GP2. The plate body 610 having rigidity does not need to be puncturable by the guide pins GP2.

With such a configuration, rigidity and strength can be further imparted to the cleaning device 22, and the plate body 611 that can be punctured with the guide pins GP2 can also be protected.

The plate body used as the support body has two layers in this example, but may have three or more layers as necessary. However, when the plate body 611 that can be punctured with the guide pins GP2 is used as the plate body, the plate body 611 is required to be provided so as to contact the contaminant collector RL2 as illustrated in Fig. 22.

Also in the cleaning device 22 of the sixteenth execution mode, a cover film (cover) 13 is releasably provided on the surface 601 of the contaminant collector RL2 on the exposed side where the plate body 610 and the plate body 611 serving as a support body are not provided, and covers the surface 601 of the contaminant collector RL2.

The case of using the cleaning device 22 of the sixteenth execution mode is similar to the case of the cleaning device 20 of the thirteenth execution mode in that the operator can carry the cleaning device and clean the end face ES2, of the optical connector OC2, from which the guide pins GP2 protrudes in a short time by a similar simple procedure and operation.

The cleaning device 22 of the sixteenth execution mode can be manufactured by a method in which a laminate of the plate body 610 having rigidity and the plate body 611 that can be punctured with the guide pins GP2 is formed, the contaminant collector RL2 is formed thereon so as to come into contact with the plate body 611 that can be punctured with the guide pins GP2, and the cover film 600 is provided thereon.

As described above, the contaminant collector RL2 may be formed according to the material of the contaminant collector RL2 or the like. An adhesive layer (not illustrated) may be interposed between the plate body 610 having rigidity and the plate body 611 that can be punctured with the guide pins GP2.

### «Sixteenth execution mode»

Fig. 23 is a longitudinal sectional view illustrating a cleaning device of a sixteenth execution mode.

The cleaning device 23 of the sixteenth execution mode is different from the cleaning device 20 of the thirteenth execution mode in that it includes, as a support body, the plate body 610 having rigidity and a side wall portion 612 formed upright on the peripheral edge of the plate body 610 so as to surround the contaminant collector RL2 from the side.

The case of using the cleaning device 23 of the sixteenth execution mode is similar to the case of the cleaning device 20 of the thirteenth execution mode in that the operator can carry the cleaning device and clean the end face ES2, of the optical connector OC2, from which the guide pins GP2 protrude in a short time by a similar simple procedure and operation.

As the support body including the plate body 610 having rigidity and the side wall portion 612 formed on the peripheral edge of the plate body 610, a shallow dish-shaped container or the like having one end (upper end) opened can be used.

When a dish-shaped container or the like is used as described above, the monomer components constituting the contaminant collector RL2 can be poured into the dish-shaped container or the like. Then, the monomer component is cured (crosslinked) by performing heating or light irradiation as necessary, and the cleaning device 23 can be easily manufactured.

The material of the side wall portion 612 may be the same as or different from that of the plate body 610.

It is preferable that the guide pin is brought into contact with the contaminant collector RL2 at a position where a distance between the side face of the guide pin and the surface of the side wall portion 612 is longer than the length (GL) of the guide pins GP2.

When the guide pins GP2 press the contaminant collector RL2, the contaminant collector RL2 temporarily stores distortion and releases the stored distortion, so that the contaminant collector RL2 is deformed to approach the guide pins or the connector. When the stored distortion is sufficient, the contaminant collector RL2 can be deformed so as to be in close contact with the surfaces of the guide pins GP2 or the end face of the connector.

By bringing the guide pins GP2 into contact with the contaminant collector RL at a position where the distance from the guide pin to the side wall portion 612 is longer than the length of the guide pins GP2, it is possible to store distortion necessary for deformation so as to be in close contact with the surface of the guide pins or the end face of the connector.

In other words, when the connection end face of the optical connector contacts a position where the distance from the side wall portion 612 is longer than the length of the guide pins GP2, the deformation is hardly affected by the side wall portion 612 when the contaminant collector RL2 is elastically deformed. In this way, it is possible to sufficiently clean the end face of the ferrule and the root of the guide pin. Details of the present mechanism of action are disclosed in WO 2018/074468.

### <<Seventeenth execution mode>>

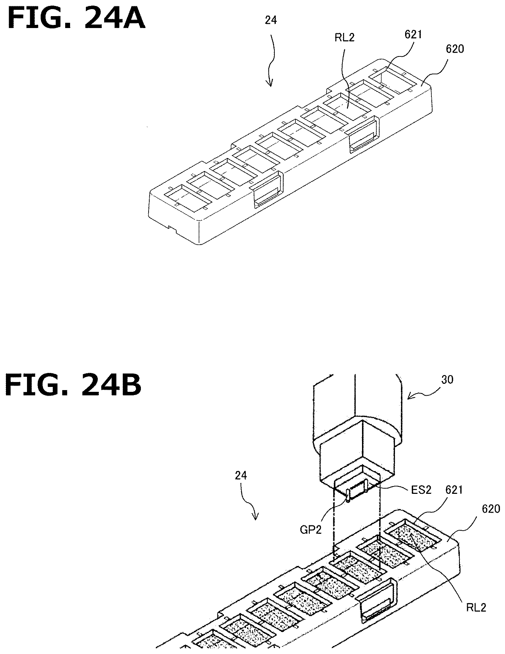

Fig. 24A is a perspective view illustrating a cleaning device 24 of a seventeenth execution mode. The cleaning device 24 includes a plate body (not shown) having rigidity, a support body composed of a side wall portion (not shown) formed on a peripheral edge of the plate body, a contaminant collector RL2 provided inside the support body, and a lid portion 620 covering an upper face of the contaminant collector RL2. The lid portion 620 has one or a plurality of window portions 621. The opening area of the window portion 621 is larger than the area of the connection end face, of the optical connector, which is the surface to be cleaned. In addition, the opening position and the size of the window portion 621 are provided such that when the optical connector is inserted into the contaminant collector via the window portion for cleaning, the guide pins GP2 are disposed at a position where the distance from the surface of the side wall portion 612 around the guide pins GP2 to the tip of the guide pins GP2 is larger than the length (GL) of the guide pins GP2 (Fig. 24B).

According to such an aspect, the operator can carry this and clean the end face ES2, of the optical connector OC2, from which the guide pins GP2 protrude in a short time by a similar simple procedure and operation.

### <<Other execution modes>>

The mode of the cover that covers the exposed surface of the contaminant collector RL2 is not limited to the film shape, and there is no limitation on the mode as long as the contaminant collector can be protected from dirt, such as a mode in which a window through which the surface to be cleaned can pass is provided and the window is covered with a film or the like, in addition to the cover shape and the cap shape as in the execution mode 17. In addition, a cover film may be provided on the upper face of the lid portion 620 having the window portion 621.

For example, in the mode of Figs. 18A to 18C, the cleaning device 20 of the thirteenth execution mode is in a state in which the side face of the contaminant collector RL2 is exposed, but it is preferable to provide a frame body or the like around the contaminant collector RL2 to protect the side face of the contaminant collector RL2 from dirty. In other examples (examples in which the support body does not have the side wall portion), the side face of the contaminant collector may be covered with a frame body or the like in the same manner.

In the above-described fourteenth to seventeenth execution modes, the rectangular plate-shaped cleaning device having a size so that the operator can carry it is exemplified as each cleaning device 20 to 24, but the shape is not limited to a rectangle, and may be a circle or the like. The cleaning device may have a shape other than the plate shape or may not have a portable size according to the object to be cleaned.

The number of pins on the end face of the object to be cleaned is not limited to two, and may be one or three or more. Further, the shape of the cross section (the plane orthogonal to the longitudinal direction) of the pins is not limited to a circular shape, and may be a polygonal shape, a C-shape, or the like, and is not limited.

As described above, the present invention is described by the embodiments, but it should not be understood that the description and drawings constituting part of this disclosure limit the present invention. Of course, the present invention includes various embodiments and the like that are not described herein.

### Examples

### •Example 1

A mixture of 10 mass% of an ester-based diol having a number average molecular weight of 1500, 80 mass% of an ether-based diol having a number average molecular weight of 2000, and 10% of an ether-based triol having a number average molecular weight of 1500 was prepared as a main agent. A mixture of monomeric diphenylmethane diisocyanate carbodiimide-modified isocyanate, an ether-based triol having a number average molecular weight of 3000, and an ester-based diol having a number average molecular weight of 500 was reacted at 80°C for 2 hours to obtain a prepolymer having NCO of about 18.9% as a curing agent. The curing agent was transferred to a container, and the main agent was weighed so that the equivalent ratio between the hydroxyl group of the polyol as the main agent and the isocyanate group of the polyisocyanate as the curing agent was 1.2 (equivalent of isocyanate group/equivalent of hydroxyl group), and added dropwise to the curing agent with stirring. After completion of the dropwise addition, a catalyst (0.3 g of dibutyltin dilaurate) was added, and the mixture was sufficiently mixed and then defoamed under vacuum to obtain a mixed liquid of Example 1.

### <Method of producing contaminant collector>

Next, the obtained mixed solution was flowed on a PET film of a thickness of 25 µm (TORAY ADVANCED FILM Co., Ltd.; Cerapeel BKE-RX) subjected to a mold release treatment to form a film having a film thickness of 350 µm using an applicator (Film applicator No. 350FA; Ko-thinngutesuta-kougyou), and a urethanization reaction was caused at 100°C for 60 minutes in a drying furnace to complete curing. A 350 µm-thick sheet-like contaminant collector was obtained. The PET film was used as it as a support body for the contaminant collector.

### •Example 2

A contaminant collector of Example 2 was obtained in the same manner as the contaminant collector of Example 1 except that the main agent was a mixture of 10 mass% of an ester-based diol having a number average molecular weight of 800, 70 mass% of an ether-based diol having a number average molecular weight of 800, and 20 mass% of an ether-based triol having a number average molecular weight of 1000, and the curing agent was a monomeric diphenylmethane diisocyanate carbodiimide-modified isocyanate, a mixture of an ester having a number average molecular weight of 3000 and an ether-based triol having a number average molecular weight of 3000, and a mixture of an ester-based diol having a number average molecular weight of 500 and an ether-based diol having a number average molecular weight of 500.

### •Example 3

A contaminant collector of Example 3 was obtained in the same manner as in the contaminant collector of Example 1 except that the main agent was a mixture of 10 mass% of an ester-based diol having a number average molecular weight of 200, 80 mass% of an ether-based diol having a number average molecular weight of 200, 5 mass% of an ester-based triol having a number average molecular weight of 200, and 5 mass% of an ether-based triol having a number average molecular weight of 200, and the curing agent was a monomeric diphenylmethane diisocyanate carbodiimide-modified isocyanate, a mixture of an ester-based triol having a number average molecular weight of 3000 and an ether-based triol having a number average molecular weight of 3000, and a mixture of an ester-based diol having a number average molecular weight of 500 and an ether-based diol having a number average molecular weight of 500.

### •Example 4

A contaminant collector of Example 4 was obtained in the same manner as in the contaminant collector of Example 1 except that the main agent was a mixture of 10 mass% of an ester-based diol having a number average molecular weight of 1500, 80 mass% of an ether-based diol having a number average molecular weight of 2000, and 10 mass% of an ether-based triol having a number average molecular weight of 1500, and the curing agent was a mixture of a hexamethylene diisocyanate, an ester-based triol having a number average molecular weight of 500, an ether-based triol having a number average molecular weight of 500, an ester-based diol having a number average molecular weight of 100, and an ether-based diol having a number average molecular weight of 100 to obtain a prepolymer having an NCO of about 12.0%.

### •Example 5

A contaminant collector of Example 5 was obtained in the same manner as in the contaminant collector of Example 1 except that the main agent was a mixture of 10 mass% of an ester-based diol having a number average molecular weight of 200, 70 mass% of an ether-based diol having a number average molecular weight of 200, 15 mass% of an ester-based triol having a number average molecular weight of 200, and 5 mass% of an ether-based triol having a number average molecular weight of 200, and the curing agent was a monomeric diphenylmethane diisocyanate carbodiimide-modified isocyanate, a mixture of an ester-based triol having a number average molecular weight of 3000 and an ether-based triol having a number average molecular weight of 3000, and a mixture of an ester-based diol having a number average molecular weight of 500 and an ether-based diol having a number average molecular weight of 500.

### •Example 6

A contaminant collector of Example 6 was obtained in the same manner as the contaminant collector of Example 1 except that the main agent was a mixture of 40 mass% of an ether-based diol having a number average molecular weight of 6000, 10 mass% of an ether-based triol having a number average molecular weight of 6000, 40 mass% of an ether-based diol polymer polyol having a number average molecular weight of 6000, and 10 mass% of a triol polymer polyol having a number average molecular weight of 6000, and the curing agent was a mixture of a monomeric diphenylmethane diisocyanate carbodiimide-modified isocyanate, an ester-based triol having a number average molecular weight of 6000, an ether-based triol, an ester-based diol having a number average molecular weight of 500, and an ether-based diol having a number average molecular weight of 500.

### •Example 7

A contaminant collector of Example 7 was obtained in the same manner as in the contaminant collector of Example 1 except that the main agent was a mixture of 10 mass% of an ester-based diol having a number average molecular weight of 1500, 60 mass% of an ether-based diol having a number average molecular weight of 2000, and 30 mass% of an ether-based triol having a number average molecular weight of 1500, and the curing agent was a mixture of a monomeric diphenylmethane diisocyanate carbodiimide-modified isocyanate, an ester-based triol having a number average molecular weight of 3000, an ether-based triol having a number average molecular weight of 3000, an ester-based diol having a number average molecular weight of 500, and an ether-based diol having a number average molecular weight of 500.

### •Example 8

A contaminant collector of Example 8 was obtained in the same manner as in the contaminant collector of Example 1 except that the main agent was a mixture of 10 mass% of an ester-based diol having a number average molecular weight of 800, 70 mass% of an ether-based diol having a number average molecular weight of 800, and 20 mass% of an ether-based triol having a number average molecular weight of 1000, and the curing agent was a mixture of a hexamethylene diisocyanate, an ester-based triol having a number average molecular weight of 500, an ether-based triol having a number average molecular weight of 500, an ester-based triol having a number average molecular weight of 500, an ether-based diol having a number average molecular weight of 100, and an ester-based diol having a number average molecular weight of 100, to obtain a prepolymer having NCO of 12.0%.

### •Comparative Example 1

A contaminant collector of Comparative Example 1 was obtained in the same manner as in the contaminant collector of Example 1 except that the main agent was a mixture of 40 mass% of an ether-based diol having a number average molecular weight of 6000, 10 mass% of a triol having a number average molecular weight of 6000, 40 mass% of an ether-based diol polymer polyol having a number average molecular weight of 6000, and 10 mass% of a triol polymer polyol having a number average molecular weight of 6000, and the curing agent was a mixture of a hexamethylene diisocyanate, an ester-based triol having a number average molecular weight of 500, an ether-based triol, an ester-based diol having a number average molecular weight of 100, and an ether-based diol, to obtain a prepolymer having NCO of 12.0%.

### •Comparative Example 2

A contaminant collector of Comparative Example 2 was obtained in the same manner as in the contaminant collector of Example 1 except that the main agent was a mixture of 45 mass% of an ether-based diol having a number average molecular weight of 2000, 5 mass% of an ester-based triol having a number average molecular weight of 2000, 45 mass% of an ether-based diol having a number average molecular weight of 3000, and 5 mass% of an ester-based triol having a number average molecular weight of 3000, and the curing agent was a mixture of a monomeric diphenylmethane diisocyanate, an ester-based triol having a number average molecular weight of 3000, an ether-based triol having a number average molecular weight of 3000, an ester-based triol having a number average molecular weight of 3000, an ether-based diol having a number average molecular weight of 200, and an ester-based diol having a number average molecular weight of 200, to obtain a prepolymer having NCO of 8.8%.

### •Comparative Example 3

A contaminant collector of Comparative Example 3 was obtained in the same manner as the contaminant collector of Example 1 except that the main agent was a mixture of 40 mass% of an ether-based diol having a number average molecular weight of 6000, 10 mass% of an ether-based diol having a number average molecular weight of 6000, 40 mass% of an ether-based diol polymer polyol having a number average molecular weight of 6000, and 10 mass% of a triol polymer polyol having a number average molecular weight of 6000, and the curing agent was a mixture of a monomeric diphenylmethane diisocyanate, an ester-based triol having a number average molecular weight of 3000, an ether-based triol having a number average molecular weight of 3000, an ester-based diol having a number average molecular weight of 200, and an ether-based diol having a number average molecular weight of 200, to obtain a prepolymer having NCO of 8.8%.

### <Evaluation>

### •Asker C hardness

The Asker C hardness of the obtained contaminant collectors of Examples and Comparative Examples was measured according to the method described in JIS K 7312: 1996 "Physical test method for thermosetting polyurethane elastomer molded product". The measurement was performed using an Asker rubber hardness tester type C manufactured by KOBUNSHI KEIKI CO., LTD. The samples of the contaminant collector used for the measurement, were stored under an environment of 25°C and 50% RH for 24 hours after completion of curing of the contaminant collectors (a sheet having a thickness of 350 µm) of each of Examples and Comparative Examples, and 9 layers of contaminant collectors were laminated, and the samples each having a thickness of 3.15 mm were measured. The results are shown in Table 1.

### •Tensile properties such as tensile strength

The tensile strength, the breaking elongation, and the breaking elongation ratio of the obtained contaminant collector of each of Examples and Comparative Examples were measured according to the measurement method using a dumbbell test piece described in JIS K 7312: 1996 "Physical test method for thermosetting polyurethane elastomer molded product". The dumbbell test piece was prepared by laminating 6 layers (thickness of 2.1 mm) of the contaminant collectors (a sheets having a thickness of 350 µm) of each of Examples and Comparative Examples, heating the laminated body in a drying furnace at 60°C for 24 hours, and molding the integrated body into a dumbbell-shaped No. 3 test piece shape. The produced dumbbell-shaped No. 3 test piece was measured using the material testing machine AGS-X (load cell: 5 kN) manufactured by SHIMADZU CORPORATION. The measurement was performed with the crosshead speed of the material testing machine set to 100 mm/min, the amount of displacement of the crosshead was measured, and the tensile strength, the breaking elongation, and the breaking elongation ratio were measured from the load and the amount of displacement when the sample was broken. The results are shown in Table 1.

### •Tear strength

The tear strength of the obtained contaminant collectors of each of Examples and Comparative Examples was measured according to the measurement method using an angle shape test piece described in JIS K 7312: 1996 "Physical test method for thermosetting polyurethane elastomer molded product". The angle shape test piece was prepared by laminating 6 layers (thickness of 2.1 mm) of the contaminant collectors (a sheets having a thickness of 350 µm) of each of Examples and Comparative Examples, heating the laminated body in a drying furnace at 60°C for 24 hours, and molding the integrated body into an angle shape test piece shape. Measurement was performed using the material testing machine AGS-X (load cell: 5 kN) manufactured by SHIMADZU CORPORATION. The measurement was performed at a crosshead speed of the material testing machine of 100 mm/min. The results are shown in Table 1.

### •Hysteresis loss

The hysteresis loss of the obtained contaminant collector of each of Examples and Comparative Examples was measured according to the measurement method using a dumbbell test piece described in JIS K 7312: 1996 "Physical test method for thermosetting polyurethane elastomer molded product". The dumbbell test piece was prepared by laminating 6 layers (thickness of 2.1 mm) of the contaminant collectors (a sheets having a thickness of 350 µm) of each of Examples and Comparative Examples, heating the laminated body in a drying furnace at 60°C for 24 hours, and molding the integrated body into a dumbbell-shaped No. 3 test piece shape. The produced dumbbell-shaped No. 3 test piece was measured using the material testing machine AGS-X (load cell: 5 kN) manufactured by SHIMADZU CORPORATION. The crosshead speed of the material testing machine was set to 1000 mm/min, and the hysteresis loss after 30 cycles of tension and compression was repeated was measured. The amount of displacement and load of the crosshead were measured, and the hysteresis loss was measured from the load and displacement amount curve after the cycle test. The results are shown in Table 1.

### •Evaluation of pin transferability and dust removability

Pin transferability and dust removability of the obtained contaminant collector of each of Examples and Comparative Examples were evaluated by the following methods. For the evaluation, an MPO jumper cord, with 12 MPO at both ends, an OM3 cord type, a total length of 1 m, flat polishing or APC 8-degree polishing, male-female, manufactured by Senko Sangyo Co., Ltd., were used, and paper dust or AC dust FINE was attached to the connection point surface in advance to obtain a connector for evaluation. After the connection end face of the connector was brought into contact with the surface of each contaminant collector, the guide pins and the surface of the connection end face of the connector were observed, and the presence or absence of dust transfer contamination to the pins and the dust removability of the connection end face of the connector were confirmed. The observation was performed at an arbitrary magnification using a microscope (model: VHX-500F) manufactured by Keyence Corporation.

The pin transferability and the dust removability are determined to be Ⓞ when dust on the guide pins and the connector connection end face can be completely removed. When dust on the fiber is removed, but dust partially remains on the connection end face. However, the connection is possible without any problem at the time of connection, they are determined to be ○, and when no dust was removed, they are determined to be ×. The results are shown in Table 1.

### •Evaluation of optical fiber portion transferability

The fiber portion transferability of the obtained contaminant collector of each of Examples and Comparative Examples was evaluated by the following method. For the evaluation, an MPO jumper cord, with 12 MPO at both ends, an OM3 cord type, a total length of 1 m, flat polishing or APC 8-degree polishing, male-female, manufactured by Senko Sangyo Co., Ltd., were used, and paper dust or AC dust FINE was attached to the connection point surface in advance to obtain a connector for evaluation. After the connection end face (including the optical fiber portion) of the connector was brought into contact with the surface of each contaminant collector, the surface of the optical fiber portion of the connection end face of the connector was observed to confirm the presence or absence of foreign matter and a transfer product. For the observation, the optical fiber of the connector was observed at an arbitrary magnification using a fiber microscope (model: P 5000i) manufactured by VIAVI. The transferability of the optical fiber portion is determined to be Ⓞ when the dust on the optical fiber portion can be completely removed. When dust on the fiber is removed, but dust partially remains on the connection end face. However, the connection is possible without any problem at the time of connection, they are determined to be ○, and when no dust was removed, they are determined to be ×. The results are shown in Table 1.

### «Evaluation results»

From the results in Table 1, the effects of the cleaning device of the present invention can be understood.

**[Table 1]**

| | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|
| Coating thickness | 350µm | 350µm | 350µm | 350µm | 350µm | 350µm | 350µm | 350µm | 350µm | 350µm | 350µm |
| Hardness(Asker C) | 67 | 85 | 85 | 45 | 90 | 90 | 70 | 53 | 35 | 40 | 95 |
| Tensile strength (MPa) | 7.0 | 22.0 | 20.7 | 2.0 | 30.0 | 30.0 | 4.2 | 14.1 | 0.7 | 1.6 | 35 |
| Tear strength (N) | 5.9 | 15.6 | 13.0 | 5.2 | 18.8 | 19.1 | 5.1 | 12.2 | 1.2 | 12.8 | 22.1 |
| Elongation (mm) | 135.0 | 111.7 | 105.0 | 139.0 | 102.0 | 98.0 | 139.1 | 113.2 | 45.0 | 373.3 | 94 |
| Elongation ratio(%) | 637.5 | 458.3 | 425.0 | 648.0 | 412.0 | 374.2 | 642.5 | 512.2 | 125.0 | 1766.7 | 195 |
| Hysteresis loss | 5.3 | 49.9 | 49.4 | 26.0 | 52.4 | 2.0 | 10.1 | 32.1 | Unmeasurable | 22.3 | 53.5 |
| Pin transferability | Ⓞ | Ⓞ | Ⓞ | Ⓞ | ○ | ○ | Ⓞ | Ⓞ | × | × | ○ |
| Dust Removal | Ⓞ | Ⓞ | Ⓞ | ○ | ○ | ○ | Ⓞ | Ⓞ | ○ | ○ | × |
| Fiber portion transfer | Ⓞ | Ⓞ | Ⓞ | Ⓞ | Ⓞ | Ⓞ | Ⓞ | Ⓞ | ○ | ○ | ○ |
| Results | Ⓞ | Ⓞ | Ⓞ | ○ | ○ | ○ | Ⓞ | Ⓞ | × | × | × |

### Reference Signs List

- 10, 20, 21, 22, 23, 24: cleaning device
- 100: housing
- 140: coil spring
- 200: supply reel
- 300: winding reel
- 410: cleaning head
- 420: head holder
- 500: winding control body
- 600: cover film (cover)
- 601: surface of contaminant collector
- 610: contaminant collector holder
- 611: plate body
- 612: side wall portion
- 620: lid portion
- 621: window portion
- CT: cleaning body
- RL: contaminant collector
- MF: maximum front position
- MR: maximum rear position
- GP: guide pin
- OC, OC2: connector
- ES, ES2: exposed face

## Claims

1. A cleaning device comprising a contaminant collector, wherein
the contaminant collector includes a polyurethane resin, wherein
the contaminant collector has an Asker C hardness of 45 to 90, and wherein
the contaminant collector has a tensile strength of 2.0 MPa or more and 30 MPa or less.

2. The cleaning device according to claim 1, wherein the contaminant collector has a hysteresis loss of 3% or more and 50% or less.

3. The cleaning device according to claim 1 or 2, wherein the contaminant collector is a strip-shaped film.

4. The cleaning device according to claim 3, wherein the contaminant collector is laminated on a substrate directly or via another layer.

5. The cleaning device according to claim 4, The cleaning device according to claim 4, wherein a release layer is laminated on the surface, of the contaminant collector, opposite the substrate.

6. The cleaning device according to any one of claims 3 to 5, wherein the contaminant collector is spirally wound.

7. The cleaning device according to any one of claims 3 to 6, further comprising:
a main body housing a supply holder to which the contaminant collector for cleaning an end face of a connector is suppliably held;
a cleaning head at which the contaminant collector supplied from the main body is positioned, the cleaning head being held at a constant holding position with respect to the main body;
a control body that is engageable with the connector and is displaceable from a first position to a second position different from the first position with respect to the cleaning head while maintaining a state of being engaged with the connector; and
a supply mechanism that transmits a motion in which the control body is displaced from the first position to the second position to the contaminant collector to displace the contaminant collector and supply the contaminant collector to the cleaning head, wherein
when the control body is located at the first position, the cleaning head is away from an end face of the connector, wherein
the contaminant collector is displaced by the supply mechanism while the control body is displaced from the first position to the second position, and wherein
when the control body is located at the second position, the cleaning head comes into contact with the end face of the connector.

8. The cleaning device according to claim 7, wherein the cleaning device is for cleaning an end face, of a connector, from which a pin protrudes.

9. The cleaning device according to claim 1, wherein
the cleaning device is for cleaning an end face of a connector from which a pin protrudes, wherein the cleaning device includes
the contaminant collector and
a support body that supports the contaminant collector such that at least part of a surface of the contaminant collector is exposed, wherein
a thickness of the contaminant collector in a direction normal to an exposed surface portion of the contaminant collector is larger than a length from a surface of the end face to a pin tip portion.

10. The cleaning device according to claim 9, wherein the support body includes a plate body and a side wall portion formed on a peripheral edge of the plate body so as to surround a side of the contaminant collector.

11. The cleaning device according to any one of claims 1 to 10, wherein the cleaning device is for cleaning an end face of an optical connector.

12. The cleaning device according to claim 11, wherein the end face of the optical connector is an end face for connecting an optical fiber.
